(19) **Europäisches Patentamt European Patent Office Office européen des brevets**

(11) **EP 1 360 463 B1**

(12) **EUROPEAN PATENT SPECIFICATION**

(45) Date of publication and mention of the grant of the patent:
**29.11.2017 Bulletin 2017/48**

(21) Application number: **02703371.1**

(22) Date of filing: **08.02.2002**

(51) Int Cl.:
*G01F 1/84* (2006.01)

(86) International application number:
**PCT/US2002/003965**

(87) International publication number:
**WO 2002/066934 (29.08.2002 Gazette 2002/35)**

(54) **VIBRATION MEASUREMENT METHOD AND APPARATUS USING MODE SELECTIVE FILTERING**

VERFAHREN UND VORRICHTUNG ZUR VIBRATIONSMESSUNG UNTER VERWENDUNG VON MODENSELEKTIVER FILTRIERUNG

PROCÉDÉS ET APPAREIL DE MESURE DE VIBRATION UTILISANT UNE FILTRATION À MODE SÉLECTIF

(84) Designated Contracting States:
**CH DE FR GB LI**

(30) Priority: **16.02.2001 US 788189**
**16.02.2001 US 788194**
**16.02.2001 US 785869**

(43) Date of publication of application:
**12.11.2003 Bulletin 2003/46**

(73) Proprietor: **Micro Motion, Inc.**
**Boulder, CO 80301 (US)**

(72) Inventors:
• **CUNNINGHAM, Timothy, J.**
**Boulder, CO 80304 (US)**

• **CAMPBELL, David, Lee**
**Boulder, CO 80303 (US)**
• **SHARP, Thomas, Dean**
**Terrace Park, OH 45174 (US)**

(74) Representative: **Ellis, Christopher Paul et al**
**Ollila Law Limited**
**Warwick Innovation Centre**
**Warwick Technology Park**
**Gallows Hill**
**Warwick CV34 6UW (GB)**

(56) References cited:
**WO-A-00/04345      WO-A-00/08423**
**WO-A-00/49371      WO-A-99/02945**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of the Invention**

The present invention relates to sensors and related methods and computer program products, and more particularly, to mass flow measurement methods, apparatus, computer program products.

**Background of the Invention**

Many sensor applications involve the detection of mechanical vibration or other motion. Examples of sensors that utilize such motion detection include Coriolis mass flowmeters and vibrating tube densitometers. These devices typically include a conduit or other vessel that is periodically driven, *i.e.,* vibrated. Properties such as mass flow, density and the like associated with a material contained in the conduit or vessel may be determined by processing signals from motion transducers positioned on the containment structure, as the vibrational modes of the vibrating material-filled system generally are affected by the combined mass, stiffness and damping characteristics of the containing conduit or vessel structure and the material contained therein.

A typical Coriolis mass flowmeter includes one or more conduits that are connected inline in a pipeline or other transport system and convey material, e.g., fluids, slurries and the like, in the system. Each conduit may be viewed as having a set of natural vibrational modes including, for example, simple bending, torsional, radial and coupled modes. In a typical Coriolis mass flow measurement application, a conduit is excited at resonance in one of its natural vibrational modes as a material flows through the conduit, and motion of the conduit is measured at points along the conduit. Excitation is typically provided by an actuator, e.g., an electromechanical device, such as a voice coil-type driver, that perturbs the conduit in a periodic fashion. Exemplary Coriolis mass flowmeters are described in U.S. Patent Nos. 4,109,524 to Smith, 4,491,025 to Smith et al., and Re. 31,450 to Smith.

Unfortunately, the accuracy of conventional Coriolis mass flowmeters may be compromised by nonlinearities and asymmetries in the conduit structure, motion arising from extraneous forces, such as forces generated by pumps and compressors that are attached to the flowmeter, and motion arising from pressure forces exerted by the material flowing through the flowmeter conduit. The effects of these forces are commonly reduced for by using flowmeter designs that are balanced to reduce effects attributable to external vibration, and by using frequency domain filters, e.g., bandpass filters designed to filter out components of the motion signals away from the excitation frequency. However, mechanical filtering approaches are often limited by mechanical considerations, e.g., material limitations, mounting constraints, weight limitations, size limitations and the like, and frequency domain filtering may be ineffective at removing unwanted vibrational contributions near the excitation frequency.

PCT publication WO 00/49371 discusses a system for determining a process parameter (i.e. mass flow) using force filtering techniques. The system force filters motion signals representing motion of a conduit such that only signals representing force of interest are used in the determination of the process parameter.

PCT publication WO 00/04345 utilizes a real normal modal resolver to estimate a process parameter. The real normal modal resolver is used to determine the real normal components of motion signals representing motion of a conduit.

PCT publication WO 00/08423 describes a method and apparatus in which a process parameter associated with a material contained in a conduit is estimated by estimating a real normal modal residual flexibility component associated with a real normal mode of motion of the conduit. A plurality of motion signals representing motion of the conduit is received. A residual-flexibility-compensated estimate of mass flow is generated from the received plurality of motion signals and the estimated real normal modal residual flexibility component.

Summary of the Invention

According to one aspect of the invention there is provided an apparatus comprising an apparatus operative to produce a plurality of motion signals representing motion of a vibrating structure; an apparatus that filters the plurality of motion signals representing motion of the structure; and an apparatus that generates a plurality of mode selective filtered motion signals such that the mode selective filtered motion signals represent motion associated with a vibrational mode of the structure; and further characterized by an apparatus for generating a plurality of phase estimates from the plurality of mode selective filtered motion signals, wherein a phase estimate is a difference, in radians or degrees, between two sinusoidal signals.

Preferably the apparatus further comprising an apparatus for generating a mass flow estimate from the plurality of phase estimates.

Preferably the apparatus further comprising an apparatus for generating a plurality of time difference estimates between the plurality of mode selective filtered motion signals; and an apparatus for generating a correlation measure from the plurality of time difference estimates; and an apparatus for determining a status of a mass flowmeter system from the generated correlation measure.

Preferably the apparatus for generating a plurality of phase estimates comprises an apparatus for generating the plurality of phase estimates using a phase reference derived from one of the plurality of mode selective filtered motion signals.

Preferably the apparatus for mode selective filtering comprises an apparatus for applying a modal transformation to the plurality of motion signals to generate a plurality of modal response signals in a modal coordinate domain; and an apparatus for applying a mode selective transformation to the plurality of modal response signals to generate the plurality of mode selective filtered motion signals.

Preferably the apparatus for generating a plurality of phase estimates comprises an apparatus for estimating a frequency of a mode selective filtered motion signal of the plurality of mode selective filtered motion signals; an apparatus for generating quadrature first and second reference signals based on the estimated frequency; and an apparatus for generating the plurality of phase estimates from the plurality of mode selective filtered motion signals and the first and second reference signals.

Preferably the apparatus for generating the plurality of phase estimates from the plurality of mode selective filtered motion signals and the first and second reference signals comprises an apparatus for multiplying a mode selective filtered motion signal by respective ones of the first and second reference signals to generate respective real and imaginary component signals of the mode selective filtered motion signal; and an apparatus for estimating an arctangent of a quotient of the real and imaginary component signals of the mode selective filtered motion signal to generate a phase estimate.

Preferably the apparatus further comprising an apparatus for generating a plurality of time difference estimates from the plurality of phase estimates.

Preferably the apparatus further comprising an apparatus for generating a mass flow estimate from the plurality of time difference estimates.

Preferably the apparatus for generating a plurality of time difference estimates from the plurality of phase estimates comprises an apparatus for dividing the plurality of phase estimates by a mode frequency to generate a plurality of time difference values.

Preferably the apparatus for generating a plurality of time difference estimates from the plurality of phase estimates further comprises an apparatus for applying a plurality of zero-flow reference time differences to the plurality of time difference values to generate the plurality of time difference estimates.

Preferably the apparatus for mode selective filtering comprises an apparatus for applying a modal transformation to the plurality of motion signals to generate a modal motion signal in a modal coordinate domain, and an apparatus for estimating the mode frequency from the modal motion signal.

Preferably the apparatus further comprising an apparatus for estimating density of material in the conduit from the estimated mode frequency.

Preferably the apparatus further comprising an apparatus for estimating a parameter of a scaling function that relates the plurality of time difference estimates to a plurality of reference time differences representing motion of the structure under a known perturbation.

Preferably the apparatus wherein the perturbation is mass flow.

Preferably the apparatus for estimating a parameter comprises an apparatus for generating an augmented matrix including the plurality of reference time differences; and an apparatus for multiplying the plurality of time difference estimates by a pseudoinverse of the augmented matrix to determine the parameter.

Preferably the apparatus for estimating a parameter comprises the step of iteratively estimating the scaling function.

Preferably the apparatus for iteratively estimating a parameter comprises the step of applying a Least Mean Square (LMS) estimation procedure.

Preferably the apparatus for estimating a parameter is preceded by the apparatus for processing a plurality of motion signals representing motion of the structure under the known perturbation to generate the plurality of reference time differences.

Preferably the parameter of the scaling function is a slope parameter and further comprising an apparatus for generating a mass flow estimate from the slope parameter and the known mass flow.

Preferably the apparatus for estimating a slope parameter comprises an apparatus for multiplying the plurality of time difference estimates by a pseudoinverse of the plurality of reference time differences to determine the slope parameter.

Preferably the parameter of the scaling function is an intercept parameter and further comprising an apparatus for determining a system status from the intercept parameter.

Preferably the apparatus for mode selective filtering is preceded by an apparatus for receiving the plurality of motion signals from a plurality of motion transducers operatively associated with the structure, and wherein said apparatus for determining a system status comprises an apparatus for determining a status of a motion transducer from the intercept parameter.

Preferably the apparatus further comprising an apparatus for estimating density of a material in the structure from the estimated mode frequency.

Preferably the apparatus further comprising an apparatus for estimating a frequency of a first mode selective filtered motion signal of the plurality of mode selective filtered motion signals; and an apparatus for generating a difference estimate from a second mode selective filtered motion signal of the plurality of mode selective filtered motion signals and the estimated frequency.

Preferably the apparatus for generating a difference estimate comprises an apparatus for generating quadrature first and second reference signals based on the estimated frequency; and an apparatus for generating a difference estimate from the second mode selective filtered motion signal and the first and second reference signals.

Preferably the apparatus for generating a difference estimate from the second mode selective filtered motion signal and the first and second reference signals comprises an apparatus for generating a phase estimate from the second mode selective filtered motion signal and the first and second reference signals; and an apparatus for generating a time difference estimate from the phase estimate.

Preferably the apparatus for generating a phase estimate from the second mode selective filtered motion signal and the first and second reference signals comprises an apparatus for multiplying the second mode selective filtered motion signal by the first and second reference signals to generate respective real and imaginary component signals of the second mode selective filtered motion signal: and an apparatus for estimating an arctangent of a quotient of the real and imaginary component signals of the second mode selective filtered motion signal to generate the phase estimate.

According to another aspect of the invention there is provided a method of operating an apparatus, the method comprising the step of estimating movement of a vibrating structure the step of mode selective filtering a plurality of motion signals representing motion of the structure; and the step of generating a plurality of mode selective filtered motion signals representing motion associated with a vibrational mode of the structure; and further characterized by the step of generating a plurality of phase estimates from the plurality of mode selective filtered motion signals, with a phase estimate being a difference, in radians or degrees, between two sinusoidal signals.

Preferably the method further comprising the step of generating a mass flow estimate from the plurality of phase estimates.

Preferably the method further comprising the steps of generating a plurality of time difference estimates from the plurality of mode selective filtered motion signals; and generating a correlation measure from the plurality of time difference estimates: and determining a status of the mass flowmeter system from the generated correlation measure.

Preferably the method wherein said step of generating a plurality of phase estimates comprises the step of generating the plurality of phase estimates using a phase reference derived from one of the plurality of mode selective filtered motion signals.

Preferably the method wherein said step of applying a mode selective filter comprises the steps of applying a modal transformation to the plurality of motion signals to generate a plurality of modal response signals in a modal coordinate domain; and applying a mode selective transformation to the plurality of modal response signals to generate the plurality of mode selective filtered motion signals.

Preferably the method wherein said step of generating a plurality of phase estimates comprises the steps of estimating a frequency of a mode selective filtered motion signal of the plurality of mode selective filtered motion signals; generating quadrature first and second reference signals based on the estimated frequency; and generating the plurality of phase estimates from the plurality of mode selective filtered motion signals and the first and second reference signals.

Preferably the method wherein said step of generating the plurality of phase estimates from the plurality of mode selective filtered motion signals and the first and second reference signals comprises the steps of multiplying a mode selective filtered motion signal by respective ones of the first and second reference signals to generate respective real and imaginary component signals of the mode selective filtered motion signal; and estimating an arctangent of a quotient of the real and imaginary component signals of the mode selective filtered motion signal to generate a phase estimate.

Preferably the method further comprising the step of generating a plurality of time difference estimates from the plurality of phase estimates.

Preferably the method further comprising the step of generating a mass flow estimate from the plurality of time difference estimates.

Preferably the method wherein said step of generating a plurality of time difference estimates from the plurality of phase estimates comprises the step of dividing the plurality of phase estimates by a mode frequency to generate a plurality of time difference values.

Preferably the method wherein said step of generating a plurality of time difference estimates from the plurality of phase estimates further comprises the step of applying a plurality of zero-flow reference time differences to the plurality of time difference values to generate the plurality of time difference estimates.

Preferably the method wherein said step of generating a plurality of time difference estimates from the plurality of phase estimates comprises correcting the plurality of phase estimates using a plurality of zero flow phase values.

Preferably the method wherein said step of mode selective filtering comprises the step of applying a modal transformation to the plurality of motion signals to generate a modal motion signal in a modal coordinate domain, and wherein the method further comprises the step of estimating the mode frequency from the modal motion signal.

Preferably the method further comprising the step of estimating density of material in the conduit from the estimated mode frequency.

Preferably the method further comprising the step of estimating a parameter of a scaling function that relates the plurality of time difference estimates to a plurality of reference time differences representing motion of the structure under a known perturbation.

Preferably the method wherein the perturbation is mass flow.

Preferably the method wherein said step of estimating a parameter comprises the steps of generating an augmented matrix including the plurality of reference time differences; and multiplying the plurality of time difference estimates by a pseudoinverse of the augmented matrix to determine the parameter.

Preferably the method wherein said step of estimating a parameter comprises the step of iteratively estimating the scaling function.

Preferably the method wherein said step of iteratively estimating comprises the step of applying a Least Mean Square (LMS) estimation procedure.

Preferably the method wherein said step of estimating a parameter is preceded by the step of processing a plurality of motion signals representing motion of the structure under the known perturbation to generate the plurality of reference time differences.

Preferably the method wherein the parameter of the scaling function is a slope parameter and further comprising the step of generating a mass flow estimate from the slope parameter and the known mass flow.

Preferably the method wherein said step of estimating a slope parameter comprises the step of multiplying the plurality of time difference estimates by a pseudoinverse of the plurality of reference time differences to determine the slope parameter.

Preferably the method wherein the parameter of the scaling function is an intercept parameter and further comprising the step of determining a system status from the intercept parameter.

Preferably the method wherein said step of mode selective filtering is preceded by the step of receiving the plurality of motion signals from a plurality of motion transducers operatively associated with the structure , and wherein said step of determining a system status comprises the step of determining a status of a motion transducer from the intercept parameter.

Preferably the method further comprising estimating density of a material in the structure from the estimated mode frequency.

Preferably the method comprising the steps of estimating a frequency of a first mode selective filtered motion signal of the plurality of mode selective filtered motion signals; and generating a difference estimate from a second mode selective filtered motion signal of the plurality of mode selective filtered motion signals and the estimated frequency.

Preferably the method wherein said step of generating a difference estimate comprises the steps of generating quadrature first and second reference signals based on the estimated frequency; and generating a difference estimate from the second mode selective filtered motion signal and the first and second reference signals.

Preferably the method wherein said step of generating a difference estimate from the second mode selective filtered motion signal and the first and second reference signals comprises the steps of generating a phase estimate from the second mode selective filtered motion signal and the first and second reference signals; and generating a time difference estimate from the phase estimate.

Preferably the method wherein said step of generating a phase estimate from the second mode selective filtered motion signal and the first and second reference signals comprises the steps of multiplying the second mode selective filtered motion signal by the first and second reference signals to generate respective real and imaginary component signals of the second mode selective filtered motion signal; and estimating an arctangent of a quotient of the real and imaginary component signals of the second mode selective filtered motion signal to generate the phase estimate.

Preferably, mass flow of a material in a conduit may be determined by processing a plurality of motion signals representing motion of the conduit using one of the plurality of motion signals as a timing reference to generate a like plurality of difference estimates, and estimating a slope parameter of a scaling function that relates the plurality of difference estimates to a like plurality of reference differences representing motion of the conduit at a known mass flow.

Preferably the signal processing circuit generates a plurality of phase estimates from the plurality of mode selective filtered motion signals, and generates a mass flow estimate from the plurality of phase estimates.

Preferably the signal processing circuit may generate the plurality of phase estimates using a phase reference derived from one of the plurality of mode selective filtered motion signals.

Preferably signal processing may also iteratively estimate the scaling function.

Glossary of Terms

Mode Selective Filter: A mode selective filter operates in the physical-modal-physical domain to pass only desired modes into the rest of the signal processing chain. A mode pass filter consists of a modal filter, a selection matrix, and a matrix to convert the modal information back into the physical domain (usually using the mode shape matrix, $\Phi$, or some subset of it).

Mode selection matrix: Diagonal matrix with ones in the location corresponding to the desired modes

Mode shape matrix: Modal matrix reduced to the desired physical locations; modal domain to physical domain transformation

Vibrational Mode: A unique property of a structure which can be used to define how the structure will respond (move) to force. In mathematical terms, an eigenvector of the matrix of equations of motion of the structure (sometimes called the dynamical matrix).

Phase estimate: The difference (in radians or degrees) between two sinusoidal signals. Any sinusoidal signal can be decomposed into 3 constant parameters, Amplitude, Phase, and Frequency, which define the value of the signal at any time t. Pickoff signals can be nearly exactly represented as sinusoids, with a common frequency and an amplitude and phase for each. The difference in phase between pickoff signals is proportional to flow.

Correlation measure: Correlation is a measure of how much of an output quantity (e.g. motion, energy, delta t, etc.) is related to an input quantity (e.g. force, energy, flow, etc). Can be used to confirm that the assumed relationship (e.g. mass flow is proportional to time delay) between measured and/or calculated values hold true. A change from good correlation to poor correlation can imply that the assumed relationship no longer holds true, e.g. due to a pickoff failing. Poor correlation can also be due to additional energy being put into a system that wasn't present during the initial setup or calibration. For example a Coriolis sensor that works fine in a lab condition, with the only energy input being the driver, may give errors in flow measurement when subjected to noisy flows caused by air injection, since there is now significant additional energy due to the flow. A correlation measure, such as the standard error of the estimate, may identify that the system has changed.

Modal transformation: A change in coordinate systems from physical domain to modal domain, defined as x = $\Phi\eta$, where $\eta$ is the modal coordinate. The modal coordinate is one of those mathematical ideas that can be thought of as defining something, and then seeing if it is a useful definition. Can also be thought of as something as simple as going from defining a circle in the x-y plane to using polar coordinates, which requires that both x and y vary, to using polar coordinates r and $\theta$, where only $\theta$ has to vary. The transformation to new coordinates simplifies the description of the system.

Quadrature first and second reference signals: A standard way to demodulate sinusoidal signals. Demodulation is a method to estimate the amplitude and phase of any sinusoid, once its frequency is known. The notch filter provides the frequency estimate of the pickoffs signals. From the frequency estimate the twiddle function generates two sinusoids at the same frequency, 90 degrees out of phase with each other (the definition of quadrature, 90 degrees in phase), usually at some unit amplitude.

Scaling function: Multiplying a signal by a constant, or a vector of constants. Augmented matrix: Augmenting a matrix is adding rows or columns to a given matrix. Used to combine an unknown matrix with a known constant to use the full dimension of the problem, i.e. adding a column of ones, or a row with zero in it. Augmenting the slope parameter with the intercept parameter is a standard least-squares curve fitting technique.

Slope and Intercept parameter: Equation y = mx + b is a parametric representation of a line. m is the slope parameter, b is the intercept parameter.

Pseudoinverse of the augmented matrix: Mathematically a line can be fitted to exactly two points. However, any two data points also have an unknown noise component. Fitting a line to every 2 points gives a noisy estimate of the line. Using many sets of data points can average out the real life noise, giving a better, less noisy estimate of the slope and intercept parameters. One way to fit a straight line through many points with a lot of noise is to use a least-squares technique. A least- squares technique minimizes the sum of the distances of all the data points from the fitted line. A pseudoinverse is an efficient, standard, way to implement a least-squares fitting process. Using the augmented matrix in the pseudoinverse finds both the slope and intercept parameters in one calculation. Augmenting the matrix for the pseudoinverse allows the best fit line to have a non-zero intercept parameter, i.e. it doesn't have to pass through the origin.

**Brief Description of the Drawings**

FIG. 1 is a schematic diagram conceptually illustrating a curved-tube flow sensor structure.
FIG. 2 is a schematic diagram conceptually illustrating a straight-tube flow sensor structure.

FIG. 3 is a schematic diagram illustrating a mass flow estimating apparatus according to embodiments of the invention.

FIG. 4 is a schematic diagram illustrating a signal processing circuit according to other embodiments of the invention.

FIG. 5 is a schematic diagram illustrating a mass flow estimating apparatus according to other embodiments of the invention.

FIG. 6 is a schematic diagram illustrating an apparatus for estimating mass flow and density according to embodiments of the invention.

FIG. 7 is a schematic diagram illustrating an apparatus for generating phase estimates according to embodiments of the invention.

FIG. 8 is a schematic diagram illustrating an apparatus for generating phase estimates according to other embodiments of the invention.

FIG. 9 is a schematic diagram illustrating an apparatus for generating time difference estimates according to embodiments of the invention.

FIG. 10 is a flowchart illustrating operations for estimating mass flow according to embodiments of the invention.

FIG. 11 is a flowchart illustrating operations for estimating mass flow according to other embodiments of the invention.

FIGS. 12 and 13 are waveform diagrams illustrating mass flow estimation operations according to the invention.

FIG. 14 is a flowchart illustrating operations for iteratively estimating a mass flow scaling vector according to embodiments of the present invention.

FIG. 15 is a flowchart illustrating operations for generating phase estimates according to embodiments of the invention.

FIG. 16 is a flowchart illustrating operations for estimating mass flow according to other embodiments of the invention.

FIG. 17 is a flowchart illustrating operations for generating difference estimates according to embodiments of the invention.

FIG. 18 is a flowchart illustrating operations for estimating mass flow according to embodiments of the invention.

FIG. 19 is a flowchart illustrating operations for estimating density according to embodiments of the invention.

FIGS. 20A, 20B and 21-27 are waveform diagrams illustrating exemplary effects of system changes according to aspects of the invention.

FIGS. 28-30 are flowcharts illustrating operations for monitoring system status and compensating for system changes according to embodiments of the invention.

## Detailed Description of Embodiments

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout. As will be appreciated by one of skill in the art, the present invention may be embodied as systems (apparatus), methods, or computer program products.

The embodiments of the present invention described herein relate to Coriolis mass flowmeters. Those skilled in the art will appreciate, however, that the invention described herein is generally applicable to determination of motion in a wide variety of mechanical structures, and thus the apparatus and methods of the present invention are not limited to Coriolis mass flowmetering.

As will be appreciated by one of skill in the art, the present invention may be embodied as apparatus and/or method and/or computer program product. Accordingly, the present invention may be implemented in hardware or in a combination of hardware and software aspects. Furthermore, the present invention may also take the form of a computer program product including a computer-usable storage medium having computer-usable program code embodied in the medium. Any suitable computer readable medium may be utilized, including semiconductor memory devices (*e.g.*, RAMs, ROMs, EEPROMs, and the like), hard disks, CD-ROMs, optical storage devices, and magnetic storage devices.

Computer program code for carrying out operations of the present invention may be written in an object oriented programming language, such as Java® or C++, and/or in a procedural programming languages, such as "C." The program code may execute one a single computer or data processing device, such as a microcontroller, microprocessor, or digital signal processor (DSP), or may be executed on multiple devices, for example, on multiple data processing devices that communicate via serial or parallel data busses within an electronic circuit board, chassis or assembly, or which form part of a data communications network such as a local area network (LAN), wide area network (WAN), or internet.

The present invention is described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program code (instructions). These computer program code may be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart and/or block diagram block or blocks.

These computer program products also may be embodied in a computer-readable storage medium (*e.g.*, magnetic disk or semiconductor memory, code magnetic memory or the like) that can direct a computer or other programmable data processing apparatus to function in a particular manner, such that the computer program stored in the computer-readable memory produce an article of manufacture including instruction means which implement the function specified in the flowchart and/or block diagram block or blocks.

The computer program code may also be loaded onto a computer or other programmable data processing apparatus to cause a series of operational steps to be performed on the computer or other programmable apparatus to produce a computer implemented process such that the code that executes on the computer or other programmable apparatus provides steps for implementing the functions specified in the flowchart and/or block diagram block or blocks.

## Modal Behavior of a Vibrating Conduit

Behavior of a vibrating structure such as a Coriolis mass flowmeter conduit may be described in terms of one or more natural modes having associated natural frequencies of vibration. The modes and the associated natural frequencies may be mathematically described by eigenvectors and associated eigenvalues, the eigenvectors being unique in relative magnitude but not absolute magnitude and orthogonal with respect to the mass and stiffness of the structure. The linearly independent set of vectors may be used as a transformation to uncouple equations that describe the structure's motion. In particular, the response of the structure to an excitation can be represented as a superposition of scaled modes, the scaling representing the contribution of each mode to the motion of the structure. Depending on the excitation, some modes may contribute more than others. Some modes may be undesirable because they may contribute energy at the resonant frequency of desired modes and, therefore, may corrupt measurements taken at the resonant frequency of a desired mode, such as phase difference measurements taken at the drive frequency.

Conventional Coriolis mass flowmeters typically use structural and temporal filtering to reduce the effects of undesirable modes. Conventional structural filtering techniques include using mechanical features such as brace bars designed to decouple in phase and out of phase bending modes, actuators positioned such that they are less likely to excite undesirable modes, and transducers positioned such that they are less sensitive to undesirable modes. Structural filtering techniques can be very effective in reducing energy of undesired modes, but may be limited by geometric and fabrication constraints.

Temporal filtering techniques typically modify transducer signals based on time domain or frequency domain parameters. For example, a typical Coriolis mass flowmeter may include frequency domain filters designed to remove frequency components that are significantly correlated with undesired modes. However, off-resonance energy from undesired modes may contribute considerably to energy at the resonant frequency of a desired mode. Because frequency-domain filters generally are ineffective at distinguishing the contribution of multiple modes at a given frequency, the contribution of undesired modes at a measurement frequency may be a significant source of error in process parameter measurements.

A sensor conduit structure with negligible damping and zero flow may be assumed to have purely real natural or normal modes of vibration, *i.e.*, in each mode, each point of the structure reaches maximum difference simultaneously. However, a real conduit having non-negligible damping and a material flowing therethrough has a generally complex response to excitation, *i.e.*, points of the structure generally do not simultaneously reach maximum amplitude. The motion of the conduit structure may be described as a complex mode having real and imaginary components or, alternatively, magnitude and phase components. Coriolis forces imparted by the flowing material render motion of the sensor conduit mathematically complex.

Even if complex, motion of a conduit structure can be described as a superposition of scaled natural ("normal" or "single degree of freedom" (SDOF)) modes, as the real and imaginary parts of a complex mode are linearly independent by definition. To represent complex motion, complex scaling coefficients may be used in combining the constituent real normal modes. Particular real normal modes may be closely correlated with the imaginary component of the complex mode while being significantly less correlated with the real component of the complex mode. Accordingly, these particular real normal modes may be more closely correlated with the Coriolis forces associated with the material in the sensor conduit, and thus can provide information for generating an accurate estimate of a parameter associated with the material.

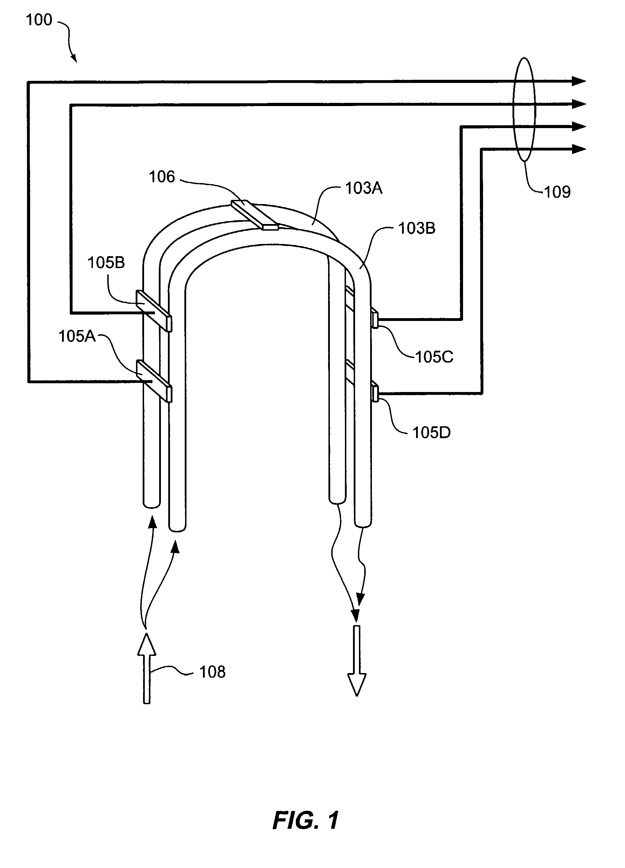

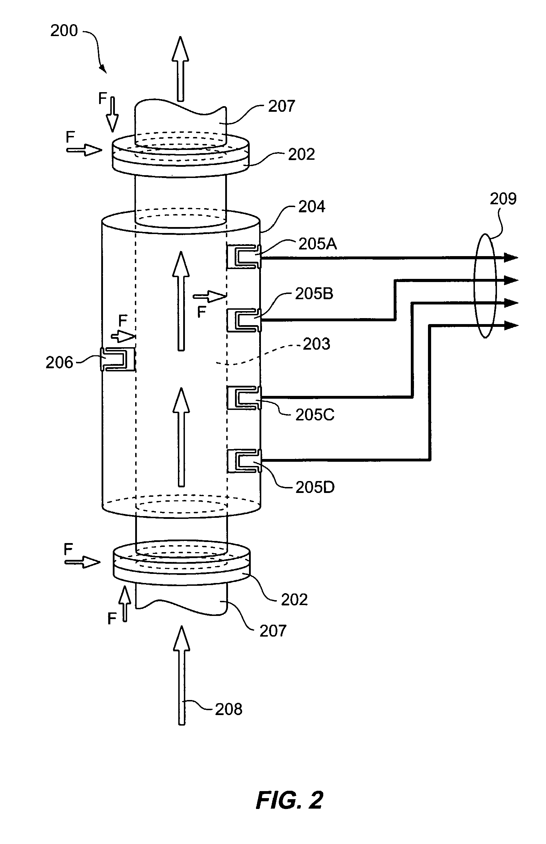

A conceptual model of one type of Coriolis mass flowmeter sensor 100 is provided in FIG. 1. Motion transducers 105A, 105B, 105C, 105D (*e.g.*, velocity transducers) are positioned to detect relative motion of first and second curved conduits 103A, 103B of the sensor 100 that are vibrated by a an actuator 106 as a material 108 flows through the conduits 103A, 103B, the motion transducers 105A, 105B, 105C, 105D producing motion signals 109. A "straight tube" Coriolis flowmeter sensor 200 illustrated in FIG. 2 includes a conduit 203 configured to contain a material 208 from a pipeline 207 connected to the sensor 200 at flanges 202. Within a housing 204 surrounding the conduit 203, an actuator 206 is operative to excite the conduit 203. Motion transducers 205A, 205B, 205C, 205D (*e.g.*, velocity transducers, accelerometers or other motion-sensing devices) are positioned along the conduit 203. The motion transducers 205A, 205B, 205C, 205D produce motion signals 209 representing motion of the conduit 203 in response to a plurality of forces F that may include, for example, a drive force imparted by the actuator 206, Coriolis forces arising from the flowing material 208, pressure forces exerted by the material 208, and other extraneous forces such as forces imparted by the pipeline 207 and forces generated by pumps, compressors and other equipment (not shown) connected to the pipeline 207 and conveyed to the conduit 203 via the flanges 202.

For a flowmeter structure such as those illustrated in FIGS. 1 and 2, a response vector x can be constructed from the signals produced by motion transducers that are operatively associated with the structure, such as the motion signals 109, 209 produced by motion transducers 105A, 105B, 105C, 105D, 205A, 205B, 205C, 205D of FIGS. 1 and 2. For example, the motion signals may be sampled to generate motion signal values $x_1$, $x_2$, ..., $x_n$ of a response vector x. A real normal modal matrix $\Phi$, that is, an eigenvector matrix relating the physical motion vector to a modal motion vector $\eta$ representing motion in a plurality of natural (SDOF) modes, may then be identified such that:

$$\mathrm{x} = \Phi \eta \qquad (1)$$

The modal matrix $\Phi$ can be identified using a number of techniques, including trial and error or inverse techniques.

**Exemplary Mass Flowmeters**

According to embodiments of the present invention, selective modal filtering techniques are used to produce mode selective filtered motion signals that are then used to generate phase estimates, which are in turn used to generate a mass flow estimate. Exemplary embodiments according to this aspect of the present invention will now be described, in particular, embodiments using "straight tube" sensors such as the sensor 200 of FIG. 2. Those skilled in the art will appreciate, however, that the present invention is also applicable to curved-conduit structures, such as that used in the sensor 100 illustrated in FIG. 1, as well as to other material-containing structures used in mass flowmeters, densitometers and the like. Those skilled in the art will further appreciate that the present invention is also applicable to the characterization of motion in a variety of other structures.

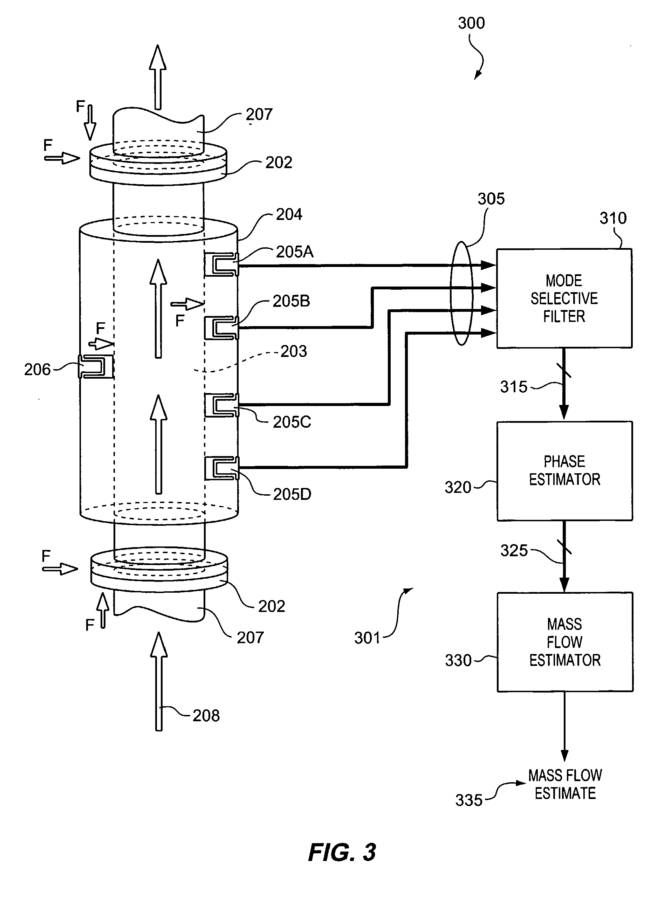

FIG. 3 illustrates a mass flow estimating apparatus 300 according to embodiments of the present invention. The apparatus 300 includes a material-containing conduit 203 and operatively associated motion transducers 205A, 205B, 205C, 205D of a flowmeter sensor 200, along with a signal processing circuit 301 that is operative to generate a mass flow estimate from motion signals 305 produced by the motion transducers 205A, 205B, 205C, 205D. Like numbers are used in FIGS. 2 and 3 to denote like components of the sensor 200, detailed description of which will not be repeated here in light of the description of FIG. 2.

The signal processing circuit 301 includes a mode selective filter 310 that is configured to receive the motion signals 305 and operative to selectively pass one or more components of the motion signals 305 to produce a plurality of mode selective filtered motion signals 315. The signal processing circuit 301 also includes a phase estimator 320 that is responsive to the mode selective filtered motion signals 315 and operative to generate a plurality of phase estimates 325 therefrom. The signal processing circuit 301 further includes a mass flow estimator 330 that is responsive to the phase estimator 320 and produces a mass flow estimate 335 from the plurality of phase estimates 325.

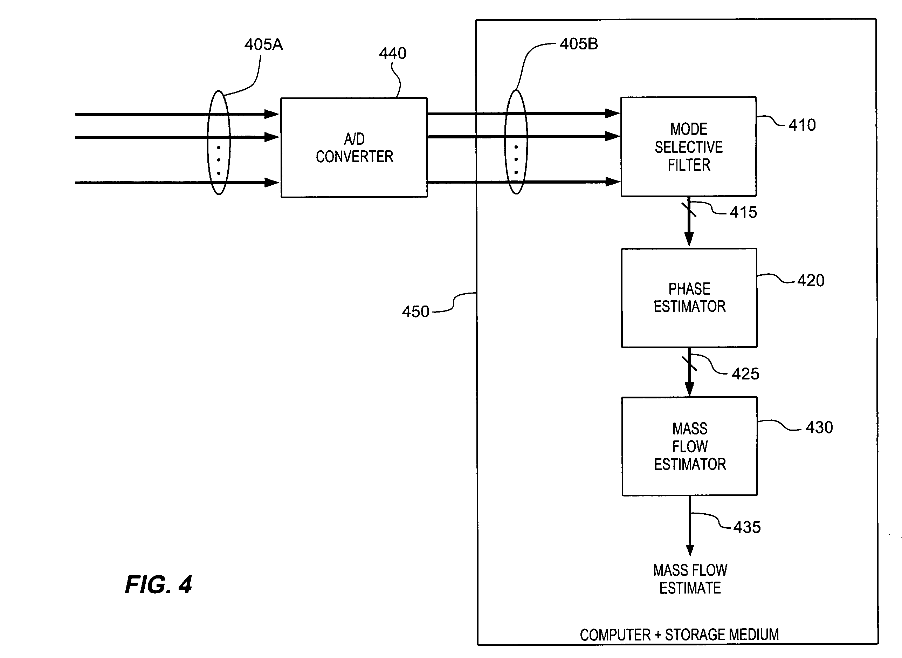

FIG. 4 illustrates an exemplary implementation of a mode selective filter 410, phase estimator 420 and mass flow estimator 430 according to embodiments of the present invention. A plurality of motion signals 405a, *e.g.*, analog outputs from velocity or other motion transducers operatively associated with a conduit or other material-containing vessel, is sampled and digitized by an A/D converter 440, producing a plurality of digital motion signals 405b. The digital motion signals 405b are processed by a digital mode selective filter 410 to produce a plurality of mode selective filtered digital motion signals 415. A digital phase estimator 420 generates a plurality of digital phase estimates 425 from the plurality of mode selective filtered digital motion signals 415. A digital mass flow estimator 430 produces a digital mass flow estimate 435 from the plurality of digital phase estimates 425. As shown, the mode selective filter 410, the phase estimator 420 and the mass flow estimator 430 may be implemented as computer readable program code executed by a data processor 450, for example, a combination of a computer (*e.g.*, a microcontroller, microprocessor, digital signal processor (DSP), or other computing device) and an associated storage medium (*e.g.*, semiconductor memory magnetic storage and/or optical storage).

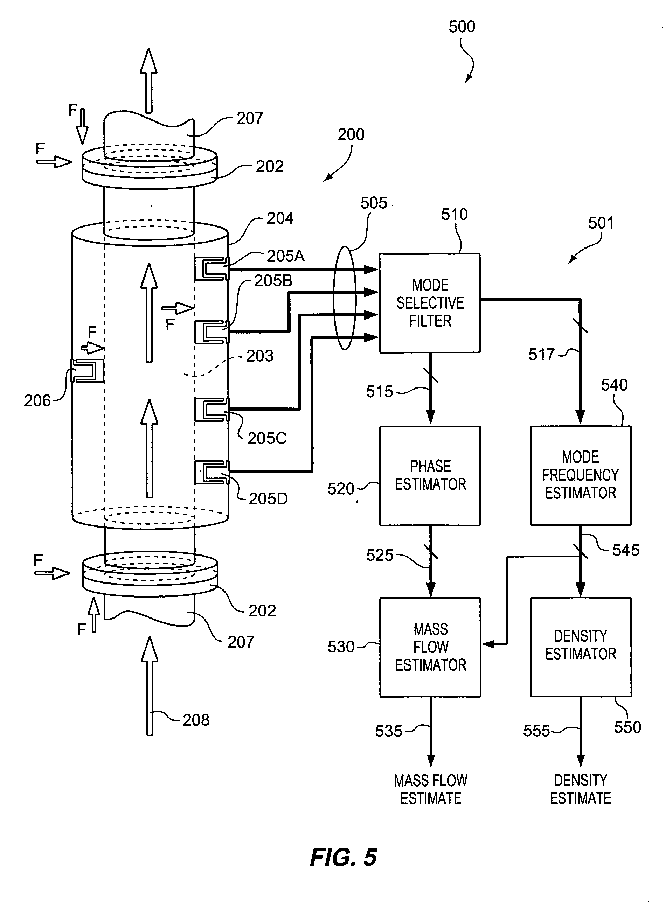

FIG. 5 illustrates an exemplary mass flow estimating apparatus 500 according to other embodiments of the present invention. The apparatus 500 includes a material-containing conduit 203 and operatively associated motion transducers 205A, 205B, 205C, 205D of a straight-tube sensor 200 such as that described with reference to FIG. 2, further detailed description of which will not be repeated in light of the description of FIG. 2. A signal processing circuit 501 includes a mode selective filter 510 that is configured to receive the motion signals 505 produced by the sensor 200 and operative to selectively pass one or more components of the motion signals 505 to produce a plurality of mode selective filtered motion signals 515. The mode selective filter 510 is further operative to produce at least one modal motion signal 517, *i.e.,* at least one signal that represents motion of the conduit 203 in a modal domain defined by at least one natural (SDOF) mode of the conduit 203. The mode selective filter 510 is preferably derived from a modal characterization of the sensor 200.

The signal processing circuit 501 further includes a phase estimator 520 that is responsive to the mode selective filter 510 and operative to generate a plurality of phase estimates 525 from the plurality of mode selective filtered motion signals 515. The signal processing circuit 501 also includes a mass flow estimator 530 that is responsive to the phase estimator 520 and produces a mass flow estimate 535 from the plurality of phase estimates 525 using at least one mode frequency estimate 545 generated by a mode frequency estimator 540. The mode frequency estimator 540 produces the at least one mode frequency estimate 545 responsive to the at least one modal motion signal 517. The signal processing circuit 501 further includes a density estimator 550 that is responsive to the at least one mode frequency estimate 545 to generate a density estimate 555.

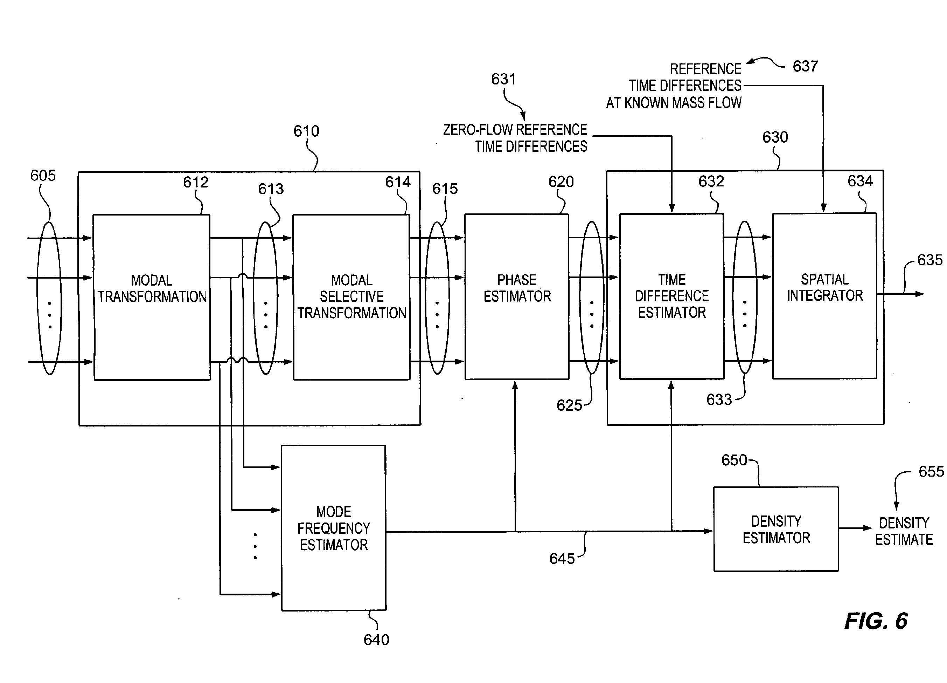

FIG. 6 illustrates an apparatus 600 operative to estimate mass flow and density from a plurality of motion signals 605, according to embodiments of the invention. The apparatus 600 includes a mode selective filter 610, a phase estimator 620, a mass flow estimator 630, a mode frequency estimator 640 and a density estimator 650. The mode selective (or "mode pass") filter 610 includes a modal transformation 612 that transforms a plurality of motion signals 605 into a plurality of modal motion signals 613 that represent motion in a plurality of natural modes, as described above with reference to equation (1). The mode selective filter 610 also includes a mode selective transformation 614 that selectively transforms the plurality of modal motion signals 613 back out of the modal domain, producing mode selective filtered motion signals 615 that are filtered such that components of the original motion signals 615 that are associated with one or more desired modes are preferentially passed in relation to components associated with other, undesired natural modes. The modal motion signals 613 are passed on to the mode frequency estimator 640, which generates one or more mode frequency estimates 645.

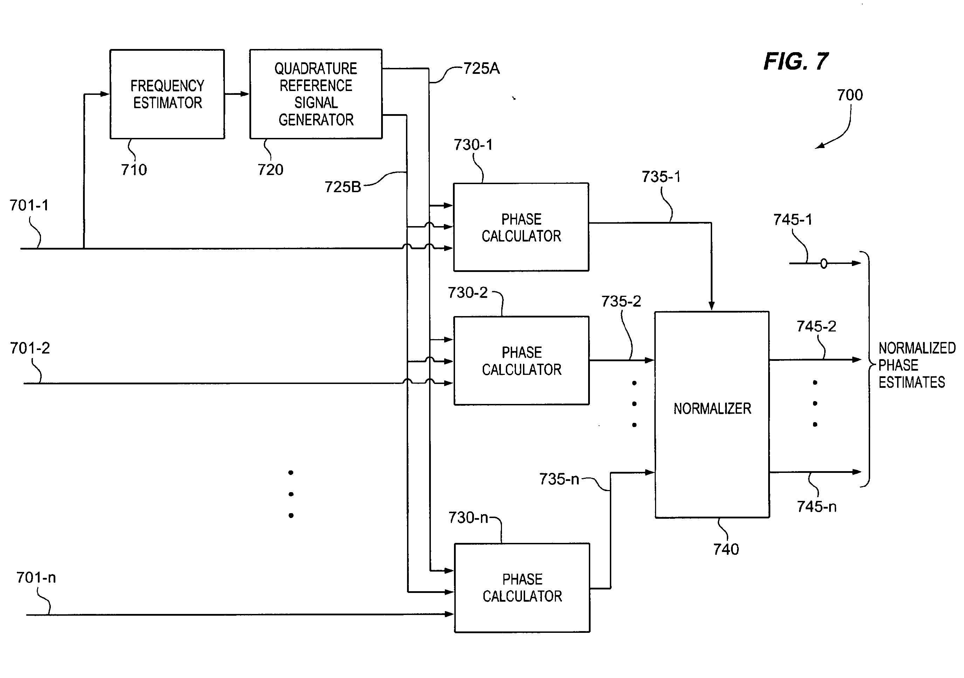

The mode selective filtered motion signals 615 are passed on to the phase estimator 620, which generates a plurality of phase estimates 625 therefrom using a phase reference that is derived from the plurality of motion signals 605. For example, as described in detail with reference to FIG. 7 below, the phase reference may be derived from one or more of the mode selective filtered motion signals 615. Alternatively, the phase reference may be derived from one or more mode frequency estimates 645 generated from one or more of the modal motion signals 613 by the mode frequency estimator 640.

The phase estimates 625 are passed onto the mass flow estimator 630 that includes a time difference estimator 632 and a spatial integrator 634. Using the one or more mode frequency estimates 645 generated by the mode frequency estimator 640, the time difference estimator 632 generates a plurality of time difference estimates 633 from the plurality of phase estimates 625. The time difference estimator 640 may also use zero-flow reference time differences 631, *i.e.,* values representing time differences under a zero mass flow condition which may corrupt measurements at other mass flow rates, to generate time differences 633 that are corrected for such "zero offset." As described below, an estimate of a drive mode frequency may be generated by the mode frequency estimator 640, and phase estimates may be divided by this estimated drive mode frequency to yield uncorrected time difference estimates. The uncorrected time difference estimates may then be corrected using the zero-flow reference time differences 631 (*e.g.*, by subtraction therefrom) to generate the time difference estimates 633.

The time difference estimates 633 generated by the time difference estimator 632 are provided to a spatial integrator 634. As described in detail below, the spatial integrator 634 may determine a slope parameter of a scaling vector function that relates the plurality of time difference estimates 633 to a plurality reference time differences 637 corresponding to a known mass flow. This slope parameter may then be used to generate a mass flow estimate 635 from the known mass flow.

As also shown in FIG. 6, the density estimator 650 may also use the mode frequency estimate 645 to generate an estimate of density of the material for which mass flow is being determined. The density estimator 650 may utilize techniques similar to those used to generate a density estimate 655 from a non-mode selective filtered transducer signal. For example, according to embodiments of the present invention, density estimates may be generated by using modal frequency estimates in place of the conventional frequency estimates utilized in the aforementioned patents.

FIGS. 7-9 illustrate exemplary structures for implementing various components of FIG. 6. It will be appreciated that the mode selective filter 610, phase estimator 620, mass flow estimator 630, the mode frequency estimator 640 of FIG. 6, as well as the structures of FIGS. 7-9, may be implemented in a digital domain, *e.g.*, as executable modules, subroutines, objects and/or other types of software and/or firmware running on a microprocessor, microcontroller, DSP or other computing device. In such implementations, "signals," such as the modal motion signals 613, mode selective filtered motion signals 615 and phase estimates 633 may include vectors of digital signal values that are produced at calculation intervals and upon which computations are performed to implement the functions described. However, it will be appreciated that all or some of these signals may, in general, be digital or analog, and that the operations performed thereon may be performed by special-purpose digital hardware and/or analogous analog hardware.

FIG. 7 illustrates an example of a phase estimator 700 according to embodiments of the present invention. The phase estimator 700 includes a frequency estimator 710 that estimates a frequency of a mode selective filtered motion signal $701_1$ of a plurality of mode selective filtered motion signals $701_1$, $701_2$, ... $701_n$. The frequency estimator 710 produces a frequency estimate 715 which is applied to a quadrature reference signal generator 720 that generates first and second (*e.g.*, sine and cosine) reference signals 725a, 725b that have the estimated frequency and that are in phase quadrature with respect to one another. The frequency estimator 710 may, for example, be a digitally-implemented adaptive notch filter that is operative to determine the frequency estimate 715, and the quadrature reference signal generator 720 may generate the quadrature reference signals 725a, 725b using a "twiddle" function. However, it will be appreciated that other techniques, including other digital and analog signal processing techniques for generating phase and quadrature reference signals, may be used to generate the frequency estimate 715 and/or the quadrature reference signals 725a, 725b. For example, rather than generating the frequency estimate 715 from a mode-selectively filtered signal as shown in FIG. 7, the frequency estimate may be a mode frequency estimate, such as one or more of the mode frequency estimates 645 produced by the mode frequency estimator 640 of FIG. 6.

The first and second phase reference signals 725a, 725b are applied to a plurality of phase calculators $730_1$, $730_2$, ... , $730_n$, respective ones of which generate respective phase estimates $735_1$, $735_2$, ... , $735_n$ from respective ones of the mode selective filtered motion signals $701_1$, $701_2$, ... , $701_n$. Phase estimates $735_2$, ... , $735_n$ are then normalized with respect to one of the phase estimates phase estimates $735_1$ by a normalizer 740 to produce a plurality of normalized phase estimates $745_1$, $745_2$, ... , $745_n$. The normalized phase estimates $745_1$, $745_2$, ... , $745_n$ may then be used to estimate mass flow, as described above with reference to FIG. 6.

Referring again to FIG. 6, the mode frequency estimator 640 may use frequency estimation techniques similar to those described above with reference to FIG. 7. For example, frequency-determining adaptive notch filtering techniques may be used to generate at least one frequency estimate 645 for at least one of the modal motion signals 617.

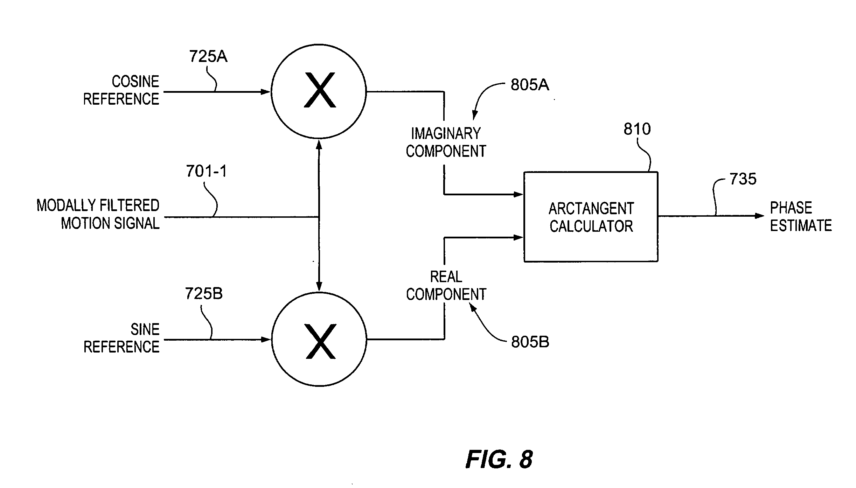

Exemplary computing operations for demodulating a mode selective filtered motion signal 701j using the synthesized quadrature (*e.g.*, sine and cosine) reference signals 725a, 725b are illustrated in FIG. 8. The mode selective filtered motion signal 701j is separately multiplied by each of the quadrature reference signals 725a, 725b, generating real and imaginary component signals 805b, 805a. An arctangent calculator 810 then computes an arctangent of the real and imaginary component signals 805b, 805a to generate a phase estimate 735j. Preferably, the real and imaginary component signals 805b, 805a are filtered before application to the arctangent calculator 810, such that non-DC components of the signals 805b, 805a are attenuated.

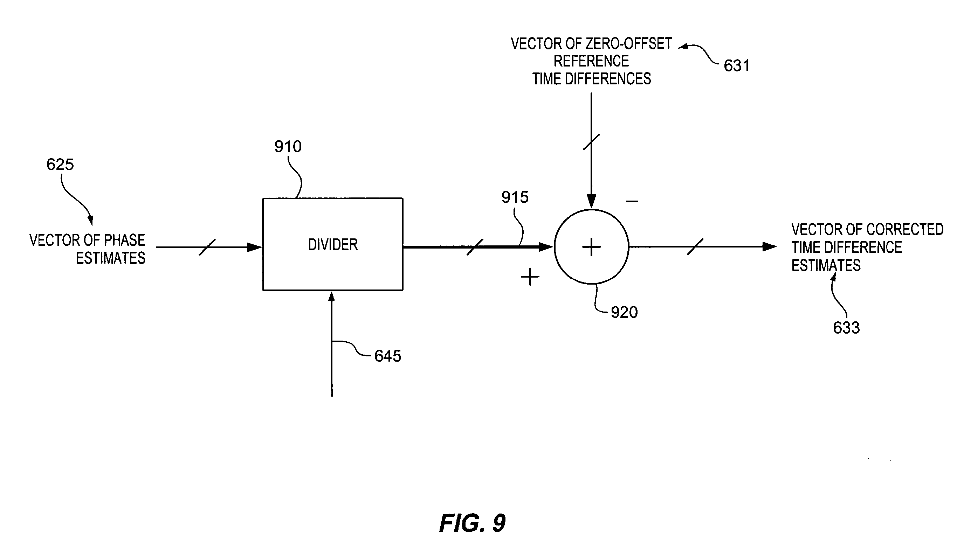

FIG. 9 illustrates an exemplary computing structure for generating corrected time difference estimates 633 according to embodiments of the present invention. A vector of phase estimates 625 (which may be normalized) is divided by an estimated mode frequency 645, preferably one or more frequencies associated with a drive mode. The resulting vector of time differences 915 is then corrected by subtracting a corresponding vector of zero-flow reference time differences 631, producing a vector of corrected time difference estimates 633. A similar correction could alternatively be achieved by subtracting a vector of phase values associated with zero flow from the phase estimates $735_1$, $735_2$,...,$735_n$ described above.

## Spatial Integration of Time Difference Estimates

According to other aspects of the present invention, time differences estimates, such as the corrected time difference estimates described above, may be processed using a "spatial integration" procedure to produce a mass flow estimate. According to various embodiments of the present invention described below, numerous techniques may be used to determine a slope parameter that relates time difference estimates associated with an unknown mass flow to reference time differences associated with a known mass flow, including closed-form pseudoinverse techniques and iterative techniques. This slope parameter may be used to generate an estimate of the unknown mass flow.

As described in the aforementioned United States Patent Application Serial Number 09/116,410, filed July 16, 1998, a vector $Y_e$ of time difference values at known mass flow $F_c$ may be identified, and an unknown mass flow can be described in terms of this reference time difference vector $Y_e$ by a scalar multiplication, that is, a vector of estimated time differences $X_e$ for an unknown mass flow can be scaled by a scale factor $a$ (hereinafter referred to as a "slope parameter") to produce the reference time difference vector $Y_e$. In order to determine the unknown mass flow, the known mass flow $F_c$ is multiplied by the slope parameter $a$. The reference time difference vector $Y_e$ and the time difference estimate vector $X_e$ may be related as:

$$\mathrm{x}_e = a\mathrm{Y}_e + b \qquad (2)$$

Rearranging equation (2) gives:

$$\mathrm{x}_e = \begin{bmatrix} \mathrm{Y}_e & \begin{matrix} 1 \\ M \\ 1 \end{matrix} \end{bmatrix} \begin{Bmatrix} a \\ b \end{Bmatrix} = \mathrm{Zc}, \qquad (3)$$

where the augmented matrix $Z$ is formed by augmenting the reference time difference vector $Y_e$ with a column of ones. Equation (3) may be solved for the scaling vector c by premultiplying the time difference estimate vector $X_e$ by the pseudo inverse $W$ of the augmented matrix $Z$:

$$\mathrm{c} = \mathrm{Z}^{-1}\mathrm{X}_e = \mathrm{WX}_e, \qquad (4)$$

where the matrix inverse operator ($^{-1}$) is used to denote a pseudo inverse. Solving for the vector c and then multiplying $F_c$ by the slope parameter $a$ of the vector c can yield an estimate of mass flow.

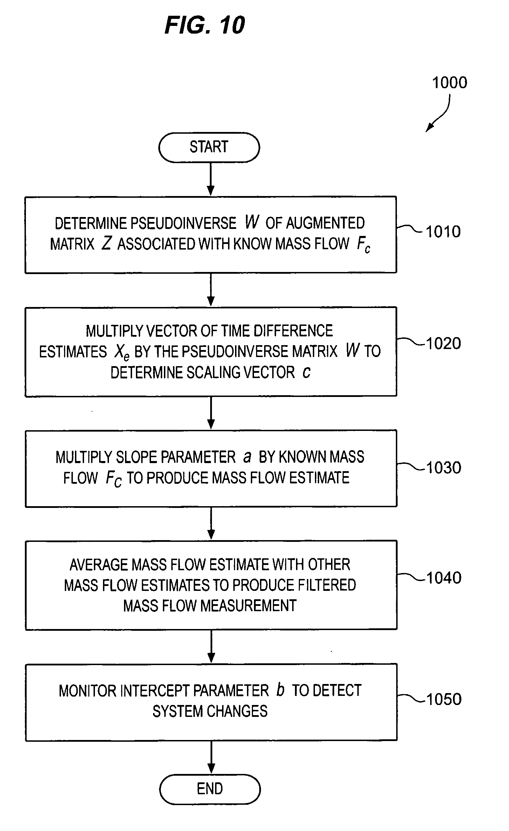

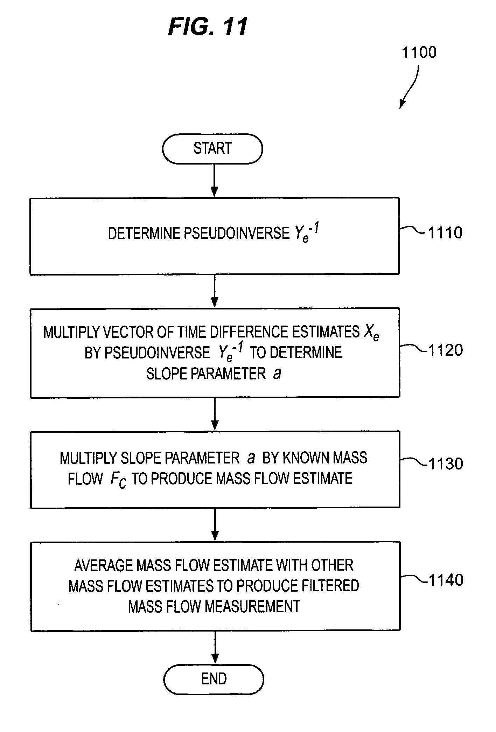

FIGS. 10 and 11 are flowchart illustrations of exemplary operations for generating a mass flow estimate from a plurality of time difference estimates according to various embodiments of the present invention. Those skilled in the art will understand that the operations of these flowchart illustrations may be can be implemented using computer instructions. These instructions may be executed on a computer or other data processing apparatus, such as the data processor 450 of FIG. 4, to create an apparatus (system) operative to perform the illustrated operations. The computer instructions may also be stored as computer readable program code on a computer readable medium, for example, an integrated circuit memory, a magnetic disk, a tape or the like, that can direct a computer or other data processing apparatus to perform the illustrated operations, thus providing means for performing the illustrated operations. The computer readable program code may also be executed on a computer or other data-processing apparatus to cause the apparatus to perform a computer-implemented process. Accordingly, FIGS. 10 and 11 support apparatus (systems), computer program products and methods for performing the operations illustrated therein.

FIG. 10 illustrates operations 1000 for generating a mass flow estimate from a vector $X_e$ of time difference estimates along the above-described lines according to embodiments of the present invention. A pseudoinverse $W$ of an augmented matrix $Z$ including a vector of reference time differences $Y_e$ associated with a known mass flow $F_c$ augmented by a column of ones is determined (Block 1010). The determination of the augmented matrix $Z$ and the pseudoinverse matrix $W$ may be done on an intermittent basis, e.g., at calibration, to reduce computational burdens. The vector of time difference estimates $X_e$ is multiplied by the pseudoinverse matrix $W$, to produce a scaling vector $c$, including a slope parameter $a$ and an intercept parameter $b$ (Block 1020). The slope parameter $a$ is then multiplied by the known mass flow $F_c$ to produce a mass flow estimate (Block 1030). It will be appreciated that the mass flow estimate may be further processed; for example, the mass flow estimate may be averaged with other mass flow estimates determined over a time period to produce a filtered mass flow measurement (Block 1040). The intercept parameter $b$ may also be monitored, for example, to detect system changes (Block 1050).

There are several advantages to monitoring the intercept parameter $b$ of the vector $c$, as will be discussed in detail below. However, it is not necessary to calculate the intercept parameter $b$ in order to generate a mass flow estimate. Equation (2) can be rewritten as:

$$\mathrm{X}_e = \mathrm{Y}_e a \qquad (5)$$

using no intercept parameter $b$. Equation (5) may be viewed as an attempt to match the shape of the time difference estimate vector $X_e$ to the shape of the reference time difference vector $Y_e$ without accounting for phase normalization. Equation (5) may work if the time difference estimate vector $Y_e$ and the reference time difference vector $X_e$ are arbitrarily normalized, and may produce better results if all of the phases are normalized by the reference phase before determination of the time difference estimates $X_e$. To solve for the slope parameter $a$, the following relation may be used:

$$a = \mathrm{Y}_e^{-1}\mathrm{X}_e. \qquad (6)$$

FIG. 11 illustrates operations 1100 for generating a mass flow estimate without determining the intercept parameter $b$ according to embodiments of the present invention. A pseudoinverse $Y_e^{-1}$ of vector of reference time differences $Y_e$ associated with a known mass flow $F_c$ is determined (Block 1110). The determination of the pseudoinverse $Y_e^{-1}$ may be done on an intermittent basis, *e.g.*, at calibration, to reduce computational burdens. The vector of time difference estimates $X_e$ is multiplied by the pseudoinverse $Y_e^{-1}$ to determine a slope parameter $a$ (Block 1120). The slope parameter $a$ is then multiplied by the known mass flow $F_c$ to produce a mass flow estimate (Block 1130). It will be appreciated that the mass flow estimate may be further processed; for example, the mass flow estimate may be averaged with other mass flow estimates determined over a time period to produce a filtered mass flow measurement (Block 1140).

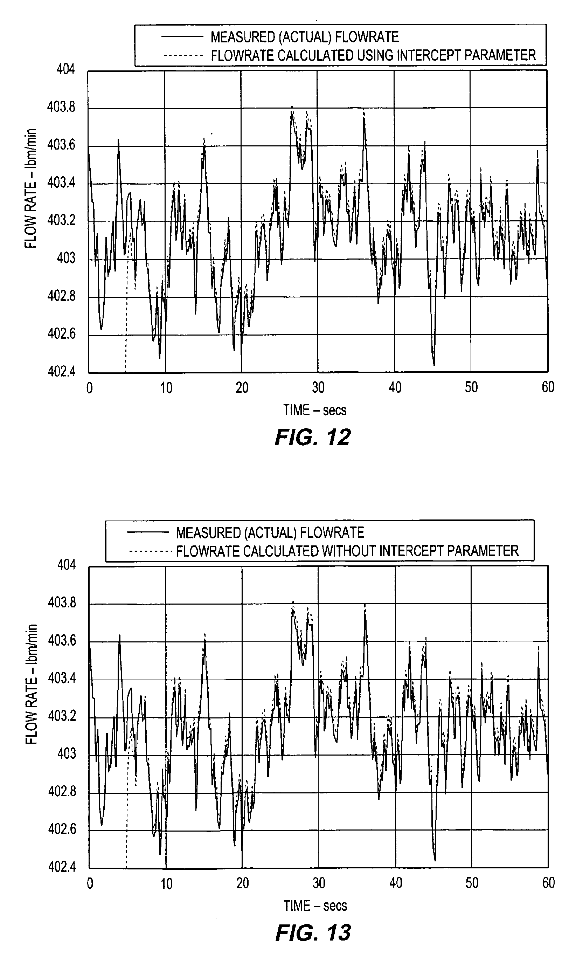

FIGS. 12 and 13 graphically illustrate test results for a prototype Coriolis mass flowmeter according to embodiments of the invention that indicate that determination of the intercept parameter $b$ is not needed to generate mass flow estimates. In particular, FIGS. 12 and 13 illustrates that mass flow estimates generated over time intervals of interest (approximately 10 to approximately 30 seconds) using respective ones of the pseudoinverse methods described above (*i.e.,* with and without determination of the intercept parameter $b$, respectively) show a similar degree of agreement with experimental mass flow rate measurements for the time intervals obtained using other means.

According to other embodiments of the present invention, a iterative technique may be used to solve for the vector $c$ in place of the pseudoinverse techniques described above. An error equation

$$L(k) = X_e(k) - Zc(k-1), \qquad (7)$$

and an associated cost function

$$J = \frac{1}{2}L^2 \qquad (8)$$

can be defined. A gradient method can be used to find a solution that reduces the cost function $J$ to a desired level, with the gradient given by:

$$\frac{\partial J}{\partial c} = -LZ. \qquad (9)$$

Small steps may be taken down the gradient towards a minimum value of the cost function $J$. At a $k$th step, a new estimate of the vector $c(k)$ is produced using the following relation:

$$\mathbf{c}(k) = \mathbf{c}(k-1) - \gamma \frac{\partial J}{\partial c} = \mathbf{c}(k-1) + \gamma LZ, \qquad (10)$$

where the vector $c(k-1)$ represents the result produced by the preceding $k$-$1$ iteration and $\gamma$ is an adaptive rate for the process. Computations may be repeatedly performed until the cost function $J$ is reduced to a predetermined level. $\gamma$ should be greater than zero and less than 2 to ensure convergence. The value of $\gamma$ generally impacts the rate of convergence and the sensitivity of the iterative process to noise. Generally, the larger the value of $\gamma$, the faster the process converges; however, a large value for $\gamma$ may increase sensitivity to noise. An optimum value for $\gamma$ may be determined experimentally, which a typically value being 0.1.

Equation (10) represents a Least Mean Square (LMS) approach to parameter estimation. A potentially more robust Normalized Least Mean Square (NLMS) version of this adaptive approach may also be used as follows:

$$\mathbf{c}(k) = \mathbf{c}(k-1) - \gamma \frac{\mathbf{Z}^T L(k)}{\alpha + \|\mathbf{Z}\|_2^2}, \qquad (11)$$

where

$$0 < \gamma < 2 \qquad (12),$$

and $\alpha$ is a constant that is included to reduce the likelihood of numerical instability if the norm of $\boldsymbol{Z}$ approaches zero. In order to provide convergence for equation (11), equation (12) should be satisfied. The value of $\alpha$ preferably is a small positive value and may be selected based on experimentation.

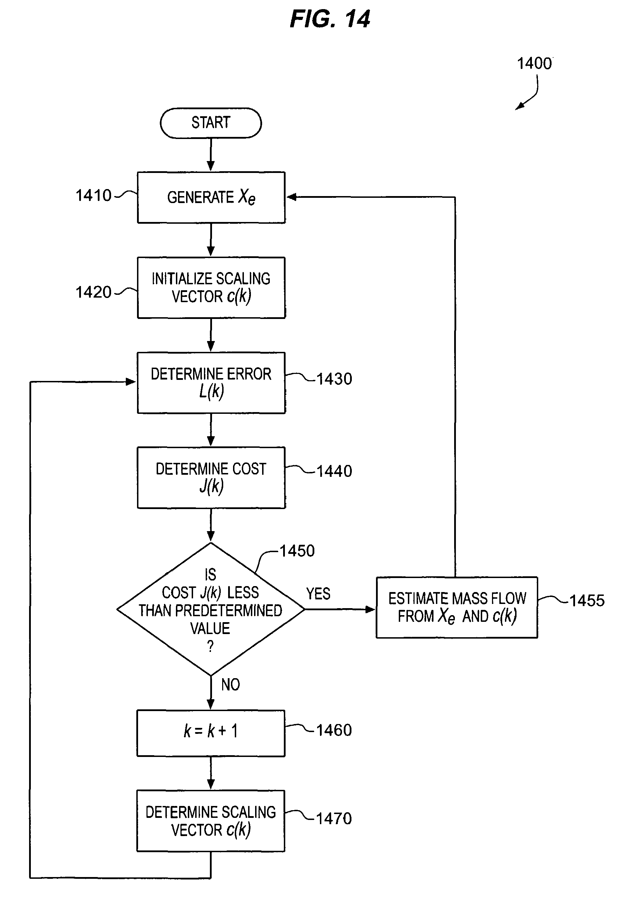

FIG. 14 illustrates operations 1400 according to embodiments of the present invention, in which a scaling vector c is iteratively determined along the lines described above. A vector $\boldsymbol{X_e}$ of time difference estimates is generated (Block 1410). An initial scaling vector estimate $\boldsymbol{c(k)}$ is generated (Block 1420). The initial value $\boldsymbol{c(k)}$ may be, for example, zero or a final estimate of a scaling vector $\boldsymbol{c}$ generated from a previous value of $\boldsymbol{X_e}$. Assuming that flow rate does not change drastically between flow measurements, the latter choice may increase the speed of convergence, as the previously estimated value for the scaling vector $\boldsymbol{c}$ should be close to the new value to be determined. An associated error $L(k)$ and cost $J(k)$ are determined, *e.g.,* using equations (7) and (8) (Block 1440). If the cost $J(k)$ is less than a predetermined value, indicating an acceptable accuracy of the scaling vector estimate $\boldsymbol{c(k)}$, an estimate of mass flow may be generated (Blocks 1450, 1455) and a new vector of time difference estimates $\boldsymbol{X_e}$ generated (Block 1410). If not, an updated estimate of the scaling vector $\boldsymbol{c(k)}$ is generated using, for example, equation (10) or equation (11) (Blocks 1460, 1470), and new error and cost function values are computed (Blocks 1430, 1440).

Those skilled in the art will appreciate that operations other than those described with reference to FIG. 14 may be used with the present invention. For example, it will be appreciated that many of the computations may be combined or varied. It will also be appreciated that there are many different iterative techniques that can be used to solve equation (3) beyond the LMS and NLMS techniques described above.

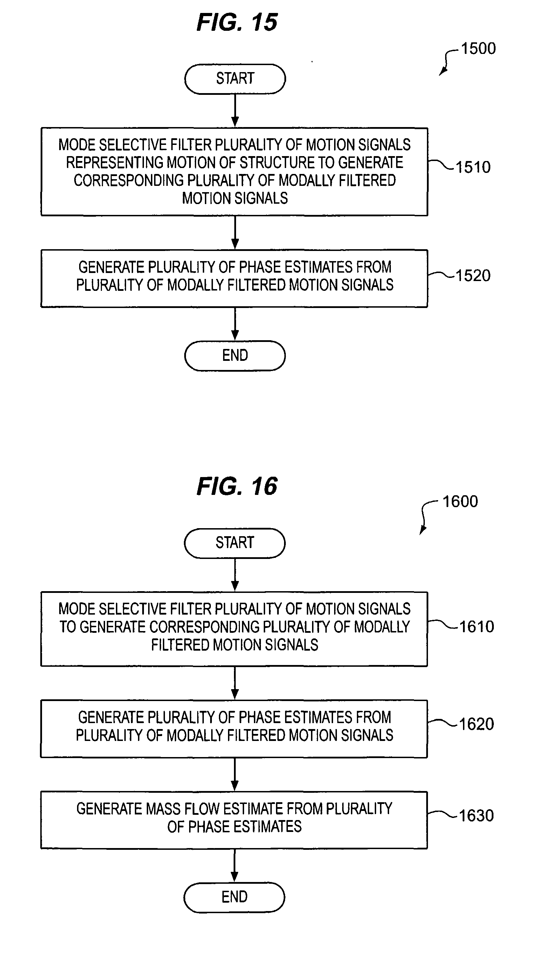

FIGS. 15-19 are flowchart illustrations of exemplary operations according to various embodiments of the present invention. Those skilled in the art will understand that the operations of these flowchart illustrations may be implemented using computer instructions. These instructions may be executed on a computer or other data processing apparatus, such as the data processor 450 of FIG. 4, to create an apparatus (system) operative to perform the illustrated operations. The computer instructions may also be stored as computer readable program code on a computer readable medium, for example, an integrated circuit memory, a magnetic disk, a tape or the like, that can direct a computer or other data processing apparatus to perform the illustrated operations, thus providing means for performing the illustrated operations. The computer readable program code may also be executed on a computer or other data-processing apparatus to cause the apparatus to perform a computer-implemented process. Accordingly, FIGS. 15-19 support apparatus (systems), computer program products and methods for performing the operations illustrated therein.

According to embodiments of the present invention illustrated by FIG. 15, operations 1500 for generating phase estimates associated with motion of a structure include mode selective filtering a plurality of motion signals representing motion of the structure to generate a corresponding plurality of mode selective filtered motion signals using, for example, techniques such as those described above with reference to FIG. 6. (Block 1510). A plurality of phase estimates is then generated from the plurality of mode selective filtered motion signals (Block 1520).

In exemplary mass flow estimation operations 1600 according to embodiments of the present invention illustrated in FIG. 16, a plurality of motion signals representing motion of a conduit are mode selective filtered to produce a plurality of mode selective filtered motion signals (Block 1610). A plurality of phase estimates is then generated from the plurality of mode selective filtered motion signals (Block 1620), and is used to generate a mass flow estimate (Block 1630).

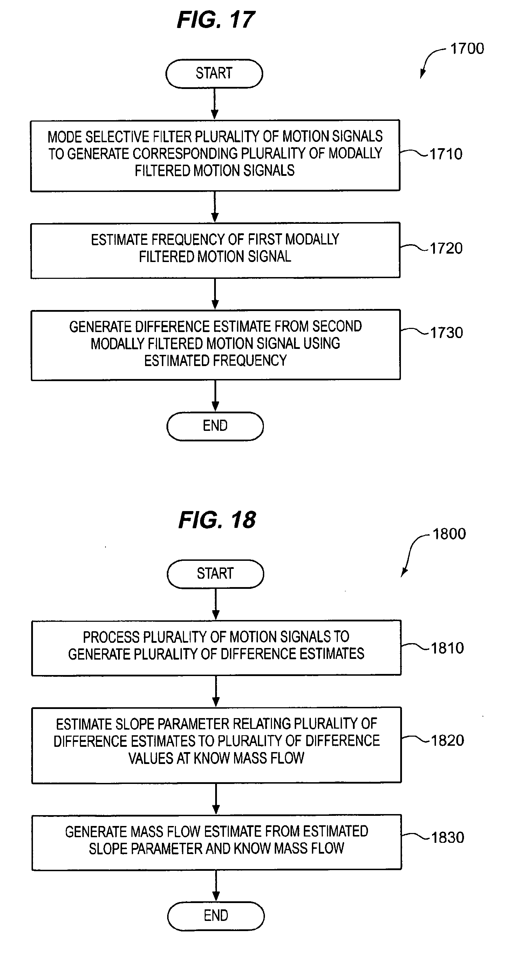

In exemplary difference estimation operations 1700 according to other embodiments of the present invention illustrated in FIG. 17, a plurality of motion signals representing motion of a structure are mode selective filtered to produce a plurality of mode selective filtered motion signals (Block 1710). A frequency of a first mode selective filtered motion signal is determined using, for example, the adaptive notch filtering operations described above with reference to FIG. 7 (Block 1720). A difference estimate, *e.g.*, a phase difference estimate and/or a time difference estimate, is then determined from a second mode selective filtered motion signal using, for example, the demodulation operations described with reference to FIG. 7. (Block 1730).

FIG. 18 illustrates Operations 1800 for generating a mass flow estimate according to yet other embodiments of the present invention. A plurality of motion signals representing motion of a conduit are processed to generate a plurality of difference estimates, for example, time difference estimates or phase difference estimates (Block 1810). A slope parameter relating the plurality of difference estimates to a plurality of reference difference values corresponding to a known mass flow is then estimated (Block 1820), and a mass flow estimate is generated from the estimated slope parameter and the known mass flow (Block 1830). These operations may be implemented using, for example, the operations described above with reference to FIGS. 10 and 11.

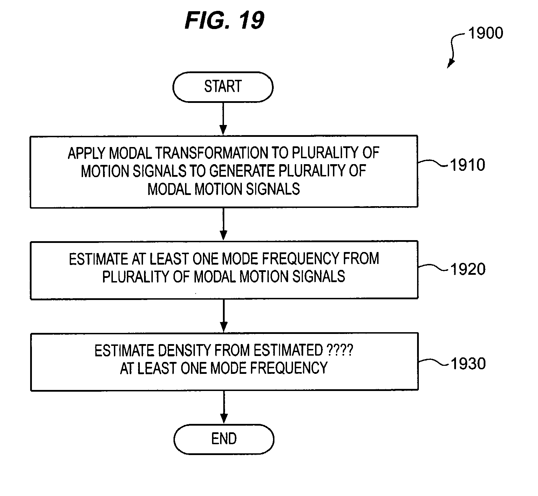

In exemplary density estimation operations 1900 according to other embodiments of the present invention illustrated in FIG. 19, a modal transformation is applied to a plurality of motion signals representing motion of a material-containing vessel to generate at least one modal motion signal representing corresponding motion in a modal domain defined by at least one vibrational mode of the vessel (Block 1910). At least one mode frequency is then determined from the at least one modal motion signal (Block 1920), and a density of the material in the vessel is determined from the at least one mode frequency estimate (Block 1930), for example, as described above with reference to FIG. 6.

**Monitoring of spatial intercept or other correlation measures to detect system status**

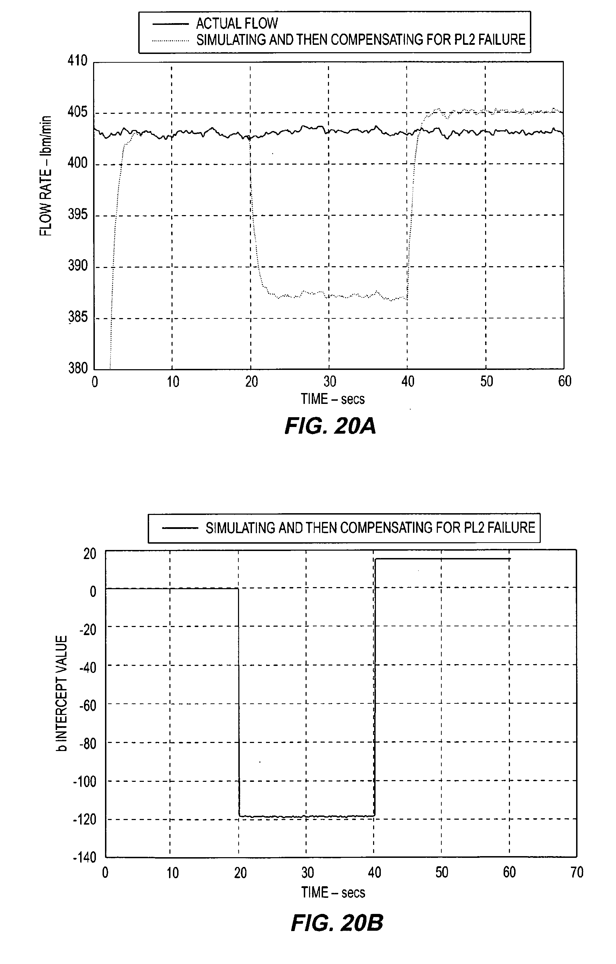

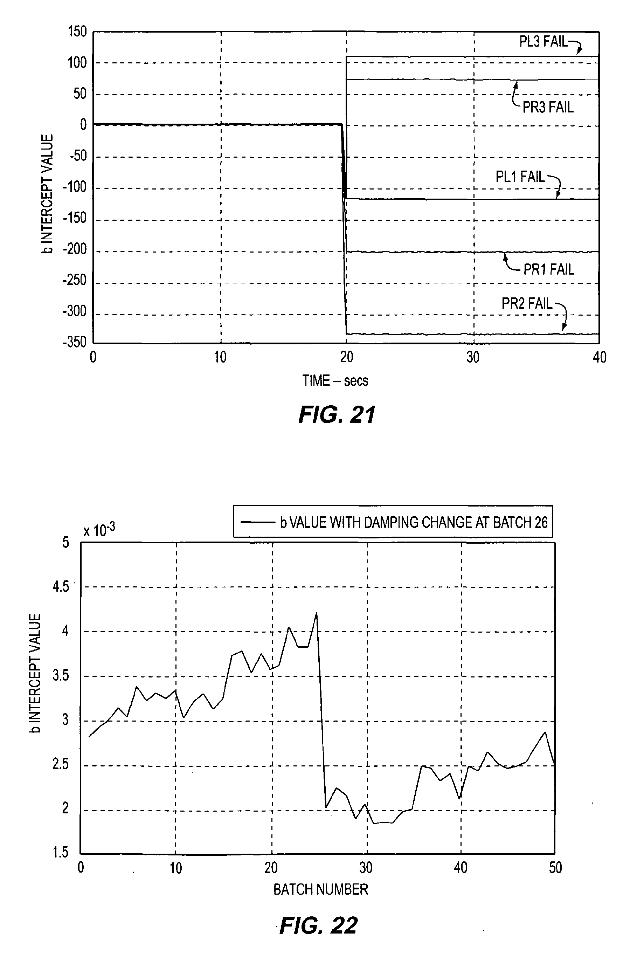

As mentioned above with reference to FIGS. 10 and 11, although the intercept parameter b of the scaling vector **c** is not needed for mass flow estimation, it may be useful for detecting system changes, such as motion transducer failure, changes in mounting conditions and the like. Potential usefulness of the intercept parameter is illustrated by the graphs of FIGS. 20A-20B and 21. FIGS. 20A-20B graphically illustrates simulated changes in computed mass flow rate and spatial intercept parameter, respectively, for failures of a motion transducer at approximately 20 seconds, the failure of particular transducer being simulated by zeroing out the corresponding elements in the vectors of time difference estimates produced by the transducer. As shown in FIG. 20A, loss of a transducer produces a change in computed mass flow rate, which might be erroneously interpreted as an actual change in mass flow rate.

The change in the intercept parameter may be used, according to embodiments of the present invention, to trigger a fault correction scheme. For example, as shown in FIGS. 20A and 20B, the pseudoinverse **W** of an augmented matrix **Z** may be recalculated by striking the row corresponding to the failed transducer, and then used to generate new mass flow estimates. As shown in FIG. 20A, where such a correction is implemented for mass flow estimates beginning at approximately 40 seconds, improved accuracy may be achieved. In particular, for the example shown, an error of 0.5% is achieved with such a correction in comparison to the 4% error occurring without such a correction.

As shown in FIG. 21, which illustrates intercept parameter values for failures of each member of a group of five motion transducers, failures of a motion transducer may be signaled by a corresponding large change in the intercept parameter, a phenomenon which typically would not occur in response to a mere change in mass flow. Other system changes, such as changes in mounting or other conditions, may also be identified by changes in the intercept parameter. In particular, FIG. 22 illustrates changes in the intercept parameter for a prototype Coriolis mass flow meter after damping is added to the structure of the meter.

The intercept parameter is one of a variety of different correlation measures that may be used to detect system changes according to embodiments of the present invention. In general, once a scaling vector c has been calculated, equation (3) above can be applied to give a vector of time differences $X_{est}$, which is a least square fit of a "measured" vector of time differences $X_e$ (produced as described above) to a basis vector:

$$\mathbf{X}_{est} = \mathbf{Zc}. \qquad (13)$$

The predicted vector of time differences $X_{est}$ may be compared to the measured vector of time difference estimates $X_e$ to produce a correlation measure that can be used for various purposes. The comparison can be done intermittently or at each computation of mass flow.

In embodiments of the present invention, a coefficient of correlation r may generated from the predicted vector of time differences $X_{est}$ and used to detect system changes. The coefficient of correlation r is a dimensionless scalar quantity between +1 and -1, and uses a quantity $\overline{X}$, which is an average of the time difference estimates $X_e$:

$$\overline{X} = mean(X_e) = \sum_{i=1}^{N} \frac{X_{ei}}{N}, \qquad (14)$$

where N is the number of data points, e.g., the number of motion transducer signals. The correlation coefficient **r** may be defined as a ratio of explained variation over total variation:

$$r = \pm \sqrt{\frac{\exp lained variation}{total variation}} = \pm \sqrt{\frac{\sum \left( X_{est} - \overline{X} \right)^2}{\sum \left( X_e - \overline{X} \right)^2}}. \qquad (15)$$

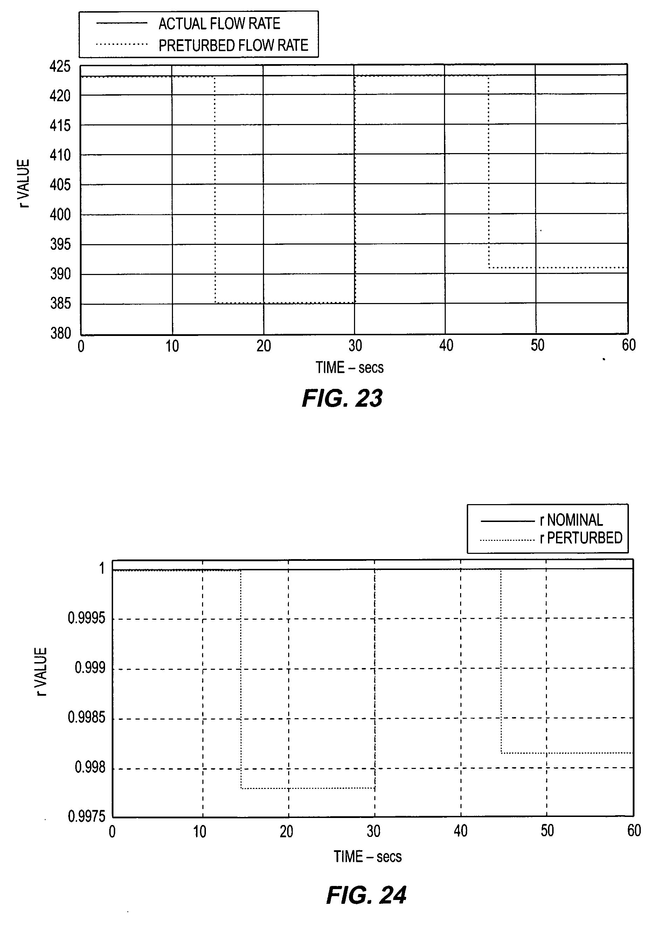

FIG. 23 illustrates how such a correlation coefficient may be used, in particular, in detecting transducer failure. Mass flow is estimated over a first time period of 0 to 15 seconds using vectors $X_e$ of time difference estimates generated from motion signals produced by transducers #1-#5. Subsequently produced vectors $X_e$ of time difference estimates are then perturbed by zeroing out motion signal values corresponding to one motion transducer (#2) from 15 to 30 seconds, simulating failure of that transducer for that time period. Vectors $X_e$ of time difference estimates are again perturbed from 45 to 60 seconds by doubling the motion signal value associated with the #2 transducer, simulating a gain change in the transducer or a "noisy" transducer signal. As seen in FIG. 23, the mass flow estimate is reduced approximately 20 lbm/min low when the #2 transducer input is zeroed and increased approximately 15 lbm/min with the motion signal input doubled.

With standard flow measurement techniques, it may be difficult to tell whether such changes are attributable to actual mass flow changes or measurement failures. However, in a manner similar to that described above with reference to the intercept parameter, the correlation coefficient $r$ may be used to detect such system changes. As shown in FIG. 24, which illustrates behavior of the correlation coefficient rover the same time interval as FIG. 23, the correlation coefficient $r$ may show a relatively large change in value with a failed (zeroed) or noisy motion signal.

Error of estimate is another correlation measure that may be used for detecting system status. A standard error of estimate $s_{x,y}$ may be expressed as:

$$s_{x,y} = \sqrt{\frac{\sum \left( X_e - X_{est} \right)^2}{N}} \qquad (16)$$

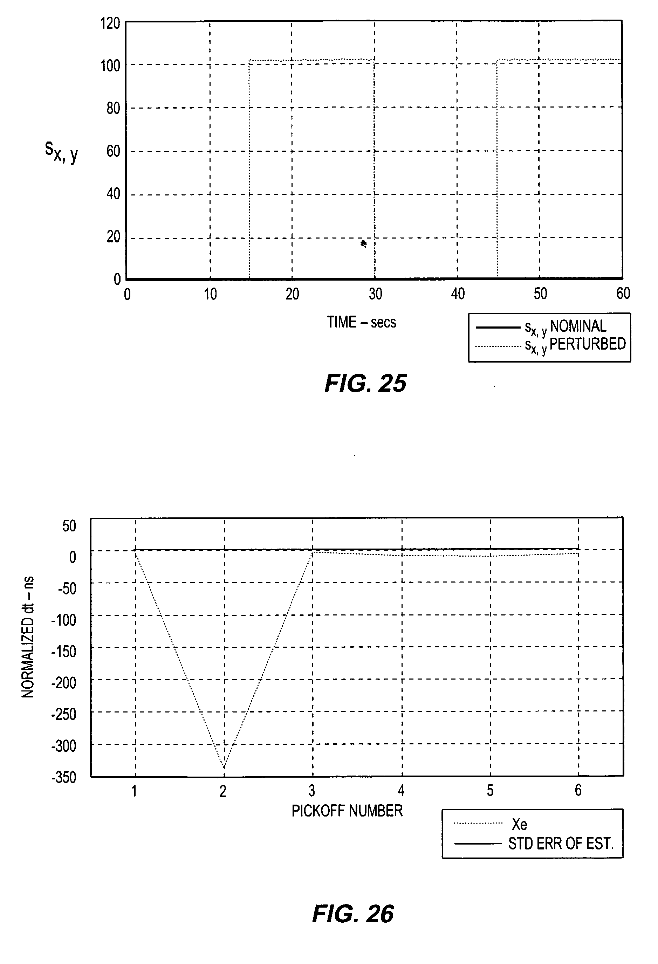

As shown in FIG.25, which shows behavior of the standard error of estimate $s_{x,y}$ for the time interval of FIGS. 23 and 24, the standard error of estimate $s_{x,y}$ may exhibit large changes for the system changes described above (it will be noted that sampling theory indicates that for a small number of transducer inputs (*e.g.*, 6), greater accuracy may be achieved by replacing the N in the denominator with N-2.)

Other properties of the error of estimate measure can be exploited to determine the source of a failure, such as the identity of a particular failed transducer. The standard error of estimate may be viewed as being analogous to the standard deviation of a data set, *i.e.*, one can expect that 99.7% of the time, the error of estimate for a time difference estimate will be within three times the standard error estimate $s_{x,y}$ of the predicted vector of time differences $X_{est}$. Accordingly, the respective errors of estimate for respective time difference estimates associated with respective transducers can be checked to see if they are within a predetermined multiple (*e.g.,* within three times) of the standard error of the estimate. Such a test may be expressed as the following inequality:

$$X_{est} - K*s_{x,y} \leq X_e \leq X_{est} + K*s_{x,y}, \qquad (17)$$

which can be rearranged to give:

$$-K*s_{x,y} \leq X_e - X_{est} \leq +K*s_{x,y} \qquad (18)$$

To identify a failed transducer, for example, the criterion of equations (17) and (18) can be applied to each component of each generated vector of time difference estimates. An error ($X_e$-$X_{est}$) of a particular time difference estimate $X_e$ associated with a failed transducer will typically be many times the standard error of estimate. This is illustrated in FIG. 26, which shows error ($X_e$ -$X_{est}$) for a failed transducer # 2 of a group of transducers in relation to the standard error of estimate for the group (the values of which are normalized for convenience by subtracting out a nominal vector). As shown, the error associated with transducer #2 is well outside the standard error of estimate bounds for the group (which, for the example shown, is approximately $\pm$ 0.07, too small to be seen on the plot of FIG. 26).

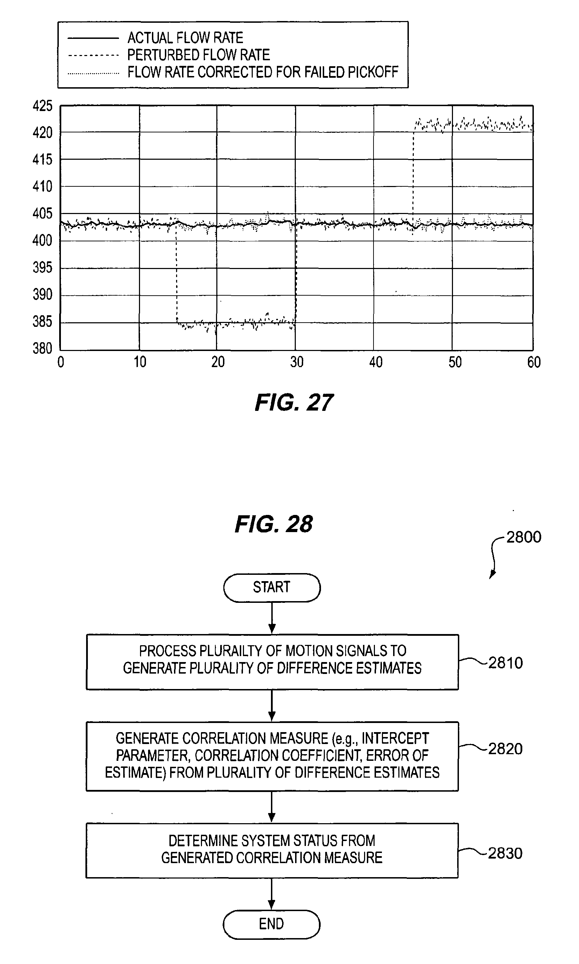

It is also possible to correct the computed mass flow rate for a failed transducer once it has been identified. For example, the augmented matrix *Z* may be reformulated by deleting the row associated with the failed transducer. A new pseudoinverse matrix *W* may then be formed by inverting the reformulated augmented matrix *Z.* Mass flow rate may then be estimated premultiplying a reduced dimension vector of time difference estimates $X_e$ in which the row associated with the failed transducer by the new pseudoinverse matrix *W* is zeroed out. FIG. 27 illustrates such correction of a mass flow rate estimate.

According to embodiments of the present invention, a flowmeter apparatus may monitor an intercept parameter, correlation coefficient, standard error of estimate or other correlation measure to detect system status. For example, upon detection of a large change in the intercept parameter, a particular failed transducer may be identified and the modal selective filter and/or the pseudoinverse matrix used by the apparatus to generate difference estimates may be recomputed to compensate for the failed transducer. Similarly, an error of a time difference estimate associated with a particular transducers moving outside of a range defined by a standard error of estimate may be used to detect transducer failure, and thus trigger corrective action.

FIG. 28 illustrates operations 2800 for detecting system status according to embodiments of the present invention. A plurality of difference estimates, *e.g.*, a vector of time difference estimates $X_e$ as described above, is generated (Block 2810). A correlation measure, such as an intercept parameter, a correlation coefficient or an error of estimate is determined (Block 2820). System status is determined from the determined correlation measure (Block 2830).

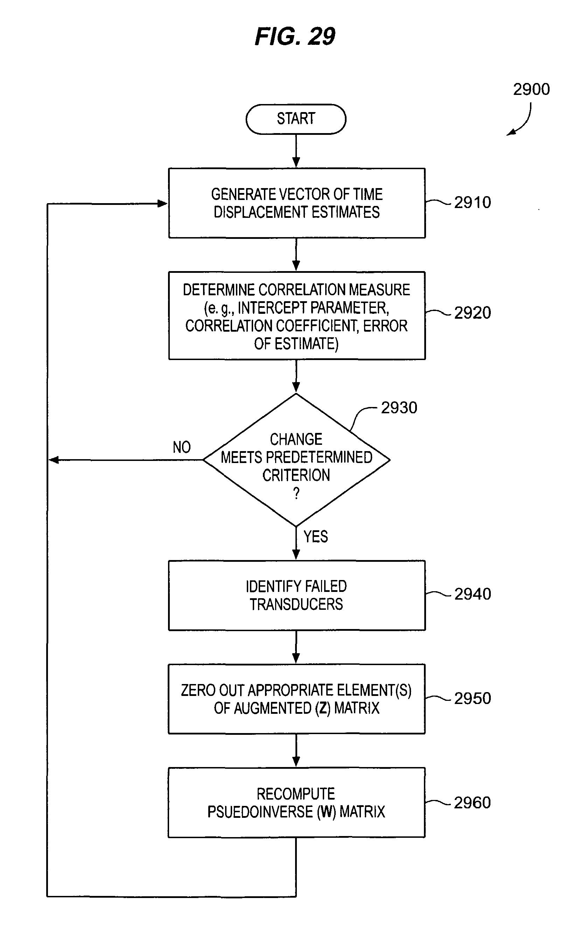

FIG. 29 illustrates exemplary operations 2900 according to other embodiments of the present invention. A vector of time difference estimates $X_e$ is generated (Block 2910). A correlation measure, such as an intercept parameter, a correlation coefficient or an error of estimate, is determined (Block 2920). If a change in the correlation measure meets a predetermined criterion, a failed transducer is identified (Blocks 2930, 2940). After identifying the failed transducer, appropriate elements of the augmented matrix $Z$ may be zeroed out, and the pseudoinverse matrix $W$ may be recomputed for use in subsequent mass flow and other computations (Blocks 2950, 2960, 2910). In this manner, input from the failed transducer may be excluded from subsequent mass flow estimates.

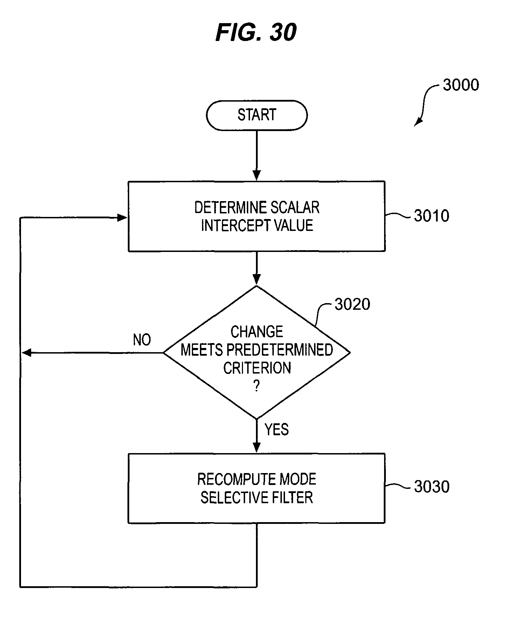

Other corrective action may be taken based on a correlation measure. For example, in exemplary operations 3000 according to embodiments of the present invention illustrated in FIG. 30, an intercept parameter is monitored (Block 3010) and, if a change in the intercept parameter meets a predetermined criterion, the apparatus may recompute the mode selective filter it uses in generating mass flow estimates (Blocks 3020, 3030). A variety of change criteria may be used, such as criteria based on maximum deviation of the intercept parameter from an initial value, average deviation of the intercept parameter over a predetermined time interval, and the like.

Those skilled in the art will appreciate that the present invention may be implemented a number of other ways than the embodiments described herein. For example, computations described herein may be implemented as separate computations, or may be combined into one or more computations that achieve equivalent results. The functions described herein may, in general, be implemented using digital and/or analog signal processing techniques. Those skilled in the art will also appreciate that, although the present invention may be embodied within an apparatus such as a Coriolis mass flowmeter, or as methods which may be performed by such apparatus, the present invention may also be embodied in a apparatus configured to operate in association with a flowmeter or sensor apparatus, such as in process control apparatus. It will also be appreciated that the present invention may be embodied in an article of manufacture in the form of computer-readable instructions or program code embodied in a computer readable storage medium such as a magnetic disk, integrated circuit memory device, magnetic tape, bubble memory or the like. Such computer program code may be executed by a computer or other data processor and executed responsive to motion signals supplied from motion transducers operatively associated with a structure, such as a conduit or other vessel.

In the drawings and specification, there have been disclosed typical preferred embodiments of the invention and, although specific terms are employed, they are used in a generic and descriptive sense only and not for purposes of limitation, the scope of the invention being set forth in the following claims.

**Claims**

1. An apparatus comprising:

   an apparatus (105 A-D) operative to produce a plurality of motion signals (109) representing motion of a vibrating structure (100);
   an apparatus (310) that filters the plurality of motion signals representing motion of the structure; and
   an apparatus that generates a plurality of mode selective filtered motion signals (315) such that the mode selective filtered motion signals represent motion associated with a vibrational mode of the structure; and
   further **characterized by** an apparatus (320) for generating a plurality of phase estimates (325) from the plurality of mode selective filtered motion signals, wherein a phase estimate Is a difference, in radians or degrees, between two sinusoidal signals.

2. The apparatus of Claim 1, further comprising an apparatus (330) for generating a mass flow estimate (335) from the plurality of phase estimates.

3. The apparatus of Claim 1, further comprising:

   an apparatus (632) for generating a plurality of time difference estimates (633) between the plurality of mode selective filtered motion signals; and
   an apparatus (634) for generating a correlation measure from the plurality of time difference estimates; and

an apparatus (450) for determining a status of a mass flowmeter system from the generated correlation measure.

4. The apparatus of Claim 1, wherein the apparatus for generating a plurality of phase estimates comprises an apparatus (620) for generating the plurality of phase estimates using a phase reference derived from one of the plurality of mode selective filtered motion signals.

5. The apparatus of Claim 1, wherein said apparatus for mode selective filtering comprises:

an apparatus (612) for applying a modal transformation to the plurality of motion signals to generate a plurality of modal response signals in a modal coordinate domain; and
an apparatus (614) for applying a mode selective transformation to the plurality of modal response signals to generate the plurality of mode selective filtered motion signals.

6. The apparatus of Claim 1, wherein said apparatus for generating a plurality of phase estimates comprises:

an apparatus (710) for estimating a frequency of a mode selective filtered motion signal of the plurality of mode selective filtered motion signals;
an apparatus (720) for generating quadrature first and second reference signals based on the estimated frequency; and
an apparatus (740) for generating the plurality of phase estimates from the plurality of mode selective filtered motion signals and the first and second reference signals.

7. The apparatus of Claim 6, wherein said apparatus for generating the plurality of phase estimates from the plurality of mode selective filtered motion signals and the first and second reference signals comprises:

an apparatus (725) for multiplying a mode selective filtered motion signal by respective ones of the first and second reference signals to generate respective real and imaginary component signals of the mode selective filtered motion signal; and
an apparatus (810) for estimating an arctangent of a quotient of the real and imaginary component signals of the mode selective filtered motion signal to generate a phase estimate.

8. The apparatus of Claim 1, further comprising an apparatus (632) for generating a plurality of time difference estimates from the plurality of phase estimates.

9. The apparatus of Claim 8, further comprising an apparatus (630) for generating a mass flow estimate from the plurality of time difference estimates.

10. The apparatus of Claim 8, wherein said apparatus for generating a plurality of time difference estimates from the plurality of phase estimates comprises an apparatus (530) for dividing the plurality of phase estimates by a mode frequency to generate a plurality of time difference values.

11. The apparatus of Claim 10, wherein said apparatus for generating a plurality of time difference estimates from the plurality of phase estimates further comprises an apparatus (632) for applying a plurality of zero-flow reference time differences to the plurality of time difference values to generate the plurality of time difference estimates.

12. The apparatus of Claim 10, wherein said apparatus for mode selective filtering comprises:

an apparatus (612) for applying a modal transformation to the plurality of motion signals to generate a modal motion signal in a modal coordinate domain, and
an apparatus (640) for estimating the mode frequency from the modal motion signal.

13. The apparatus of Claim 12, further comprising an apparatus (650) for estimating density of material in the structure from the estimated mode frequency.

14. The apparatus of Claim 8, further comprising an apparatus for estimating a parameter of a scaling function that relates the plurality of time difference estimates to a plurality of reference time differences representing motion of the structure under a known perturbation.

**15.** The apparatus of Claim 14, wherein the perturbation is mass flow.

**16.** The apparatus of Claim 14, wherein said apparatus for estimating a parameter comprises:

an apparatus for generating an augmented matrix including the plurality of reference time differences; and
an apparatus for multiplying the plurality of time difference estimates by a pseudoinverse of the augmented matrix to determine the parameter.

**17.** The apparatus of Claim 14, wherein said apparatus for estimating a parameter comprises the step of iteratively estimating the scaling function.

**18.** The apparatus of Claim 17, wherein said apparatus for iteratively estimating a parameter comprises the step of applying a Least Mean Square (LMS) estimation procedure.

**19.** The apparatus of Claim 14, wherein said apparatus for estimating a parameter is preceded by the apparatus for processing a plurality of motion signals representing motion of the structure under the known perturbation to generate the plurality of reference time differences.

**20.** The apparatus of Claim 15, wherein the parameter of the scaling function is a slope parameter and further comprising an apparatus (630) for generating a mass flow estimate from the slope parameter and the known mass flow.

**21.** The apparatus of Claim 20, wherein said apparatus (634) for estimating a slope parameter comprises an apparatus for multiplying the plurality of time difference estimates by a pseudoinverse of a matrix of the plurality of reference time differences to determine the slope parameter.

**22.** The apparatus of Claim 14, wherein the parameter of the scaling function is an intercept parameter and further comprising an apparatus for determining a system status from the intercept parameter.

**23.** The apparatus of Claim 22, wherein an apparatus for mode selective filtering is preceded by an apparatus for receiving the plurality of motion signals from a plurality of motion transducers operatively associated with the structure, and wherein said apparatus for determining a system status comprises an apparatus for determining a status of a motion transducer from the intercept parameter.

**24.** The apparatus of Claim 12, further comprising an apparatus (650) for estimating density of a material in the structure from the estimated mode frequency.

**25.** The apparatus of Claim 1, further comprising:

an apparatus (640) for estimating a frequency of a first mode selective filtered motion signal of the plurality of mode selective filtered motion signals; and
an apparatus for generating a difference estimate from a second mode selective filtered motion signal of the plurality of mode selective filtered motion signals and the estimated frequency.

**26.** The apparatus of Claim 25, wherein the apparatus for generating a difference estimate comprises:

an apparatus (720) for generating quadrature first and second reference signals based on the estimated frequency; and
an apparatus for generating a difference estimate from the second mode selective filtered motion signal and the first and second reference signals.

**27.** The apparatus according to Claim 26, wherein the apparatus for generating a difference estimate from the second mode selective filtered motion signal and the first and second reference signals comprises:

an apparatus for generating a phase estimate from the second mode selective filtered motion signal and the first and second reference signals: and
an apparatus for generating a time difference estimate from the phase estimate.

**28.** The apparatus of Claim 27, wherein the apparatus for generating a phase estimate from the second mode selective filtered motion signal and the first and second reference signals comprises:

an apparatus for multiplying the second mode selective filtered motion signal by the first and second reference signals to generate respective real and imaginary component signals of the second mode selective filtered motion signal; and
an apparatus for estimating an arctangent of a quotient of the real and imaginary component signals of the second mode selective filtered motion signal to generate the phase estimate.

**29.** A method of operating the apparatus of Claim 1, the method comprising:

a step of estimating movement of a vibrating structure;
a step of mode selective filtering a plurality of motion signals representing motion of the structure;
a step of generating a plurality of mode selective filtered motion signals representing motion associated with a vibrational mode of the structure; and
further **characterized by** a step of generating a plurality of phase estimates from the plurality of mode selective filtered motion signals, with a phase estimate being a difference, in radians or degrees, between two sinusoidal signals.

**30.** A method according to Claim 29, further comprising a step of generating a mass flow estimate from the plurality of phase estimates.

**31.** A method according to Claim 29, further comprising steps of:

generating a plurality of time difference estimates from the plurality of mode selective filtered motion signals;
generating a correlation measure from the plurality of time difference estimates; and
determining a status of the structure from the generated correlation measure.

**32.** A method according to Claim 29, wherein said step of generating a plurality of phase estimates comprises a step of generating the plurality of phase estimates using a phase reference derived from one of the plurality of mode selective filtered motion signals.

**33.** A method of Claim 29, wherein said step of applying a mode selective filter comprises steps of:

applying a modal transformation to the plurality of motion signals to generate a plurality of modal response signals in a modal coordinate domain; and
applying a mode selective transformation to the plurality of modal response signals to generate the plurality of mode selective filtered motion signals.

**34.** A method according to Claim 29, wherein said step of generating a plurality of phase estimates comprises steps of:

estimating a frequency of a mode selective filtered motion signal of the plurality of mode selective filtered motion signals;
generating quadrature first and second reference signals based on the estimated frequency; and
generating the plurality of phase estimates from the plurality of mode selective filtered motion signals and the first and second reference signals.

**35.** A method according to Claim 34, wherein said step of generating the plurality of phase estimates from the plurality of mode selective filtered motion signals and the first and second reference signals comprises steps of:

multiplying a mode selective filtered motion signal by respective ones of the first and second reference signals to generate respective real and imaginary component signals of the mode selective filtered motion signal; and
estimating an arctangent of a quotient of the real and imaginary component signals of the mode selective filtered motion signal to generate a phase estimate.

**36.** A method according to Claim 29, further comprising a step of generating a plurality of time difference estimates from the plurality of phase estimates.

**37.** A method according to Claim 36, further comprising a step of generating a mass flow estimate from the plurality of time difference estimates.

**38.** A method according to Claim 36, wherein said step of generating a plurality of time difference estimates from the plurality of phase estimates comprises a step of dividing the plurality of phase estimates by a mode frequency to generate a plurality of time difference values.

**39.** A method according to Claim 38, wherein said step of generating a plurality of time difference estimates from the plurality of phase estimates further comprises a step of applying a plurality of zero-flaw reference time differences to the plurality of time difference values to generate the plurality of time difference estimates.

**40.** A method according to Claim 38, wherein said step of generating a plurality of time difference estimates from the plurality of phase estimates comprises correcting the plurality of phase estimates using a plurality of zero flow phase values.

**41.** A method according to Claim 38, wherein said step of mode selective filtering comprises the step of applying a modal transformation to the plurality of motion signals to generate a modal motion signal in a modal coordinate domain, and wherein the method further comprises a step of estimating the mode frequency from the modal motion signal.

**42.** A method according to Claim 41, further comprising a step of estimating density of material in the conduit from the estimated mode frequency.

**43.** A method according to Claim 36, further comprising a step of estimating a parameter of a scaling function that relates the plurality of time difference estimates to a plurality of reference time differences representing motion of the structure under a known perturbation.

**44.** A method according to Claim 43, wherein the perturbation is mass flow.

**45.** A method according to Claim 43, wherein said step of estimating a parameter comprises steps of:

generating an augmented matrix including the plurality of reference time differences; and
multiplying the plurality of time difference estimates by a pseudoinverse of the augmented matrix to determine the parameter.

**46.** A method according to Claim 43, wherein said step of estimating a parameter comprises a step of iteratively estimating the scaling function.

**47.** A method according to Claim 46, wherein said step of iteratively estimating comprises a step of applying a Least Mean Square (LMS) estimation procedure.

**48.** A method according to Claim 43, wherein said step of estimating a parameter is preceded by a step of processing a plurality of motion signals representing motion of the structure under the known perturbation to generate the plurality of reference time differences.

**49.** A method according to Claim 44, wherein the parameter of the scaling function is a slope parameter and further comprising a step of generating a mass flow estimate from the slope parameter and the known mass flow.

**50.** A method according to Claim 49, wherein said step of estimating a slope parameter comprises a step of multiplying the plurality of time difference estimates by a pseudoinverse of a matrix of the plurality of reference time differences to determine the slope parameter.

**51.** A method according to Claim 43, wherein the parameter of the scaling function is an intercept parameter and further comprising a step of determining a system status from the intercept parameter.

**52.** A method according to Claim 51, wherein said step of mode selective filtering is preceded by a step of receiving the plurality of motion signals from a plurality of motion transducers operatively associated with the structure, and wherein said step of determining a system status comprises a step of determining a status of a motion transducer from the intercept parameter.

53. A method according to Claim 41, further comprising estimating density of a material in the structure from the estimated mode frequency.

54. A method of Claim 29, said method comprising steps of:

estimating a frequency of a first mode selective filtered motion signal of the plurality of mode selective filtered motion signals; and
generating a difference estimate from a second mode selective filtered motion signal of the plurality of mode selective filtered motion signals and the estimated frequency.

55. A method according to Claim 54, wherein said step of generating a difference estimate comprises steps of:

generating quadrature first and second reference signals based on the estimated frequency; and
generating a difference estimate from the second mode selective filtered motion signal and the first and second reference signals.

56. A method according to Claim 55, wherein said step of generating a difference estimate from the second mode selective filtered motion signal and the first and second reference signals comprises steps of:

generating a phase estimate from the second mode selective filtered motion signal and the first and second reference signals; and
generating a time difference estimate from the phase estimate.

57. A method according to Claim 56, wherein said step of generating a phase estimate from the second mode selective filtered motion signal and the first and second reference signals comprises steps of:

multiplying the second mode selective filtered motion signal by the first and second reference signals to generate respective real and imaginary component signals of the second mode selective filtered motion signal; and
estimating an arctangent of a quotient of the real and imaginary component signals of the second mode selective filtered motion signal to generate the phase estimate.

**Patentansprüche**

1. Vorrichtung, die Folgendes umfasst:

eine Vorrichtung (105 A-D) zum Erzeugen von mehreren Bewegungssignalen (109), die eine Bewegung einer vibrierenden Konstruktion (100) repräsentieren;
eine Vorrichtung (310), die die mehreren Bewegung der Konstruktion repräsentierenden Bewegungssignale filtert; und
eine Vorrichtung, die mehrere modenselektive gefilterte Bewegungssignale (315) erzeugt, so dass die modenselektiven gefilterten Bewegungssignale mit einer Vibrationsmode der Konstruktion assoziierte Bewegung repräsentieren; und
ferner **gekennzeichnet durch** eine Vorrichtung (320) zum Erzeugen von mehreren Phasenschätzungen (325) von den mehreren modenselektiven gefilterten Bewegungssignalen, wobei eine Phasenschätzung eine Differenz, in Radianten oder Graden, zwischen zwei sinusförmigen Signalen ist.

2. Vorrichtung nach Anspruch 1, die ferner eine Vorrichtung (330) zum Erzeugen einer Massenflussschätzung (335) von den mehreren Phasenschätzungen umfasst.

3. Vorrichtung nach Anspruch 1, die ferner Folgendes umfasst:

eine Vorrichtung (632) zum Erzeugen von mehreren Zeitdifferenzschätzungen (633) zwischen den mehreren modenselektiven gefilterten Bewegungssignalen; und
eine Vorrichtung (634) zum Erzeugen eines Korrelationsmesswertes von den mehreren Zeitdifferenzschätzungen; und

eine Vorrichtung (450) zum Bestimmen eines Status eines Massenflussmesssystems von dem erzeugten Korrelationsmesswert.

**4.** Vorrichtung nach Anspruch 1, wobei die Vorrichtung zum Erzeugen von mehreren Phasenschätzungen eine Vorrichtung (620) zum Erzeugen der mehreren Phasenschätzungen mit Hilfe einer Phasendifferenz umfasst, die von einem der mehreren modenselektiven gefilterten Bewegungssignale abgeleitet ist.

**5.** Vorrichtung nach Anspruch 1, wobei die genannte Vorrichtung für modenselektives Filtern Folgendes umfasst:

eine Vorrichtung (612) zum Anwenden einer modalen Transformation auf die mehreren Bewegungssignale zum Erzeugen von mehreren modalen Antwortsignalen in einer modalen Koordinatendomäne; und
eine Vorrichtung (614) zum Anwenden einer modenselektiven Transformation auf die mehreren modalen Antwortsignale zum Erzeugen der mehreren modenselektiven gefilterten Bewegungssignale.

**6.** Vorrichtung nach Anspruch 1, wobei die genannte Vorrichtung zum Erzeugen von mehreren Phasenschätzungen Folgendes umfasst:

eine Vorrichtung (710) zum Schätzen einer Frequenz eines modenselektiven gefilterten Bewegungssignals der mehreren modenselektiven gefilterten Bewegungssignale;
eine Vorrichtung (720) zum Erzeugen von ersten und zweiten Quadratur-Referenzsignalen auf der Basis der geschätzten Frequenz; und
eine Vorrichtung (740) zum Erzeugen der mehreren Phasenschätzungen von den mehreren modenselektiven gefilterten Bewegungssignalen und den ersten und zweiten Referenzsignalen.

**7.** Vorrichtung nach Anspruch 6, wobei die genannte Vorrichtung zum Erzeugen der mehreren Phasenschätzungen von den mehreren modenselektiven gefilterten Bewegungssignalen und den ersten und zweiten Referenzsignalen Folgendes umfasst:

eine Vorrichtung (725) zum Multiplizieren eines modenselektiven gefilterten Bewegungssignals mit jeweiligen der ersten und zweiten Referenzsignale zum Erzeugen von jeweiligen realen und imaginären Komponentensignalen des modenselektiven gefilterten Bewegungssignals; und
eine Vorrichtung (810) zum Schätzen eines Arcustangens eines Quotienten der realen und imaginären Komponentensignale des modenselektiven gefilterten Bewegungssignals zum Erzeugen einer Phasenschätzung.

**8.** Vorrichtung nach Anspruch 1, die ferner eine Vorrichtung (632) zum Erzeugen von mehreren Zeitdifferenzschätzungen von den mehreren Phasenschätzungen umfasst.

**9.** Vorrichtung nach Anspruch 8, die ferner eine Vorrichtung (630) zum Erzeugen einer Massenflussschätzung von den mehreren Zeitdifferenzschätzungen umfasst.

**10.** Vorrichtung nach Anspruch 8, wobei die genannte Vorrichtung zum Erzeugen von mehreren Zeitdifferenzschätzungen von den mehreren Phasenschätzungen eine Vorrichtung (530) zum Dividieren der mehreren Phasenschätzungen durch eine Modenfrequenz zum Erzeugen von mehreren Zeitdifferenzwerten umfasst.

**11.** Vorrichtung nach Anspruch 10, wobei die genannte Vorrichtung zum Erzeugen von mehreren Zeitdifferenzschätzungen von den mehreren Phasenschätzungen ferner eine Vorrichtung (632) zum Anwenden von mehreren Nullfluss-Referenzzeitdifferenzen auf die mehreren Zeitdifferenzwerte zum Erzeugen der mehreren Zeitdifferenzschätzungen umfasst.

**12.** Vorrichtung nach Anspruch 10, wobei die genannte Vorrichtung für modenselektives Filtern Folgendes umfasst:

eine Vorrichtung (612) zum Anwenden einer modalen Transformation auf die mehreren Bewegungssignale zum Erzeugen eines modalen Bewegungssignals in einer modalen Koordinatendomäne, und
eine Vorrichtung (640) zum Schätzen der Modenfrequenz anhand des modalen Bewegungssignals.

**13.** Vorrichtung nach Anspruch 12, die ferner eine Vorrichtung (650) zum Schätzen der Dichte von Material in der Konstruktion anhand der geschätzten Modenfrequenz umfasst.

**14.** Vorrichtung nach Anspruch 8, die ferner eine Vorrichtung zum Schätzen eines Parameters einer Skalierungsfunktion umfasst, die die mehreren Zeitdifferenzunterschiede auf mehrere Referenzzeitdifferenzen bezieht, die Bewegung der Konstruktion unter einer bekannten Störung repräsentieren.

**15.** Vorrichtung nach Anspruch 14, wobei die Störung Massenfluss ist.

**16.** Vorrichtung nach Anspruch 14, wobei die genannte Vorrichtung zum Schätzen eines Parameters Folgendes umfasst:

eine Vorrichtung zum Erzeugen einer erweiterten Matrix, die die mehreren Referenzzeitdifferenzen enthält; und eine Vorrichtung zum Multiplizieren der mehreren Zeitdifferenzschätzungen mit einer Pseudoumkehr der erweiterten Matrix zum Bestimmen des Parameters.

**17.** Vorrichtung nach Anspruch 14, wobei die genannte Vorrichtung zum Schätzen eines Parameters den Schritt des iterativen Schätzens der Skalierungsfunktion umfasst.

**18.** Vorrichtung nach Anspruch 17, wobei die genannte Vorrichtung zum iterativen Schätzen eines Parameters den Schritt des Anwendens eines LMS-(Least Mean Square)-Schätzverfahrens umfasst.

**19.** Vorrichtung nach Anspruch 14, wobei der genannten Vorrichtung zum Schätzen eines Parameters die Vorrichtung zum Verarbeiten von mehreren Bewegung der Konstruktion unter der bekannten Störung repräsentierenden Bewegungssignalen vorangeht, zum Erzeugen der mehreren Referenzzeitdifferenzen.

**20.** Vorrichtung nach Anspruch 15, wobei der Parameter der Skalierungsfunktion ein Steigungsparameter ist, und ferner umfassend eine Vorrichtung (630) zum Erzeugen einer Massenflussschätzung von dem Steigungsparameter und dem bekannten Massenfluss.

**21.** Vorrichtung nach Anspruch 20, wobei die genannte Vorrichtung (634) zum Schätzen eines Steigungsparameters eine Vorrichtung zum Multiplizieren der mehreren Zeitdifferenzschätzungen mit einer Pseudoumkehr einer Matrix der mehreren Referenzzeitdifferenzen zum Bestimmen des Steigungsparameters umfasst.

**22.** Vorrichtung nach Anspruch 14, wobei der Parameter der Skalierungsfunktion ein Achsenabschnittsparameter ist, und ferner umfassend eine Vorrichtung zum Bestimmen eines Systemstatus von dem Achsenabschnittsparameter.

**23.** Vorrichtung nach Anspruch 22, wobei eine Vorrichtung zum modenselektiven Filtern einer Vorrichtung zum Empfangen der mehreren Bewegungssignale von mehreren Bewegungswandlern vorangeht, die operativ mit der Konstruktion assoziiert sind, und wobei die genannte Vorrichtung zum Bestimmen eines Systemstatus eine Vorrichtung zum Bestimmen eines Status eines Bewegungswandlers von dem Achsenabschnittsparameter umfasst.

**24.** Vorrichtung nach Anspruch 12, die ferner eine Vorrichtung (650) zum Schätzen der Dichte eines Materials in der Konstruktion von der geschätzten Modusfrequenz umfasst.

**25.** Vorrichtung nach Anspruch 1, die ferner Folgendes umfasst:

eine Vorrichtung (640) zum Schätzen einer Frequenz eines ersten modenselektiven gefilterten Bewegungssignals der mehreren modenselektiven gefilterten Modussignale; und eine Vorrichtung zum Erzeugen einer Differenzschätzung von einem zweiten modenselektiven gefilterten Bewegungssignal der mehreren modenselektiven gefilterten Bewegungssignale und der geschätzten Frequenz.

**26.** Vorrichtung nach Anspruch 25, wobei die Vorrichtung zum Erzeugen einer Differenzschätzung Folgendes umfasst:

eine Vorrichtung (720) zum Erzeugen von ersten und zweiten Quadratur-Referenzsignalen auf der Basis der geschätzten Frequenz; und eine Vorrichtung zum Erzeugen einer Differenzschätzung von dem zweiten modenselektiven gefilterten Bewegungssignal und dem ersten und zweiten Referenzsignal.

**27.** Vorrichtung nach Anspruch 26, wobei die Vorrichtung zum Erzeugen einer Differenzschätzung von dem zweiten modenselektiven gefilterten Bewegungssignal und den ersten und zweiten Referenzsignalen Folgendes umfasst:

eine Vorrichtung zum Erzeugen einer Phasenschätzung von dem zweiten modenselektiven gefilterten Bewegungssignal und dem ersten und zweiten Referenzsignal; und
eine Vorrichtung zum Erzeugen einer Zeitdifferenzschätzung von der Phasenschätzung.

28. Vorrichtung nach Anspruch 27, wobei die Vorrichtung zum Erzeugen einer Phasenschätzung von dem zweiten modenselektiven gefilterten Bewegungssignal und dem ersten und zweiten Referenzsignal Folgendes umfasst:

eine Vorrichtung zum Multiplizieren des zweiten modenselektiven gefilterten Bewegungssignals mit dem ersten und zweiten Referenzsignal zum Erzeugen von jeweiligen realen und imaginären Komponentensignalen des zweiten modenselektiven gefilterten Bewegungssignals; und
eine Vorrichtung zum Schätzen eines Arcustangens eines Quotienten der realen und imaginären Komponentensignale des zweiten modenselektiven gefilterten Bewegungssignals zum Erzeugen der Phasenschätzung.

29. Verfahren zum Betreiben der Vorrichtung nach Anspruch 1, wobei das Verfahren Folgendes beinhaltet:

einen Schritt des Schätzens von Bewegung einer vibrierenden Konstruktion;
einen Schritt des modenselektiven Filterns von mehreren Bewegungssignalen, die Bewegung der Konstruktion repräsentieren;
einen Schritt des Erzeugens von mehreren modenselektiven gefilterten Bewegungssignalen, die mit einer Vibrationsmode der Konstruktion assoziierte Bewegung repräsentieren; und
ferner **gekennzeichnet durch** einen Schritt des Erzeugens von mehreren Phasenschätzungen von den mehreren modenselektiven gefilterten Bewegungssignalen, wobei eine Phasenschätzung eine Differenz, in Radianten oder Graden, zwischen zwei sinusförmigen Signalen ist.

30. Verfahren nach Anspruch 29, das ferner einen Schritt des Erzeugens einer Massenflussschätzung von den mehreren Phasenschätzungen beinhaltet.

31. Verfahren nach Anspruch 29, das ferner die folgenden Schritte beinhaltet:

Erzeugen von mehreren Zeitdifferenzschätzungen von den mehreren modenselektiven gefilterten Bewegungssignalen;
Erzeugen eines Korrelationsmesswertes von den mehreren Zeitdifferenzschätzungen; und
Bestimmen eines Status der Konstruktion anhand des erzeugten Korrelationsmesswertes.

32. Verfahren nach Anspruch 29, wobei der genannte Schritt des Erzeugens von mehreren Phasenschätzungen einen Schritt des Erzeugens der mehreren Phasenschätzungen anhand einer von einem der mehreren modenselektiven gefilterten Bewegungssignale abgeleiteten Phasenreferenz beinhaltet.

33. Verfahren nach Anspruch 29, wobei der genannte Schritt des Anwendens eines modenselektiven Filters die folgenden Schritte beinhaltet:

Anwenden einer modalen Transformation auf die mehreren Bewegungssignale zum Erzeugen von mehreren modalen Antwortsignalen in einer modalen Koordinatendomäne; und
Anwenden einer modenselektiven Transformation auf die mehreren modalen Antwortsignale zum Erzeugen der mehreren modenselektiven gefilterten Bewegungssignale.

34. Verfahren nach Anspruch 29, wobei der genannte Schritt des Erzeugens von mehreren Phasenschätzungen die folgenden Schritte beinhaltet:

Schätzen einer Frequenz eines modenselektiven gefilterten Bewegungssignals der mehreren modenselektiven gefilterten Bewegungssignale;
Erzeugen von ersten und zweiten Quadratur-Referenzsignalen auf der Basis der geschätzten Frequenz; und
Erzeugen der mehreren Phasenschätzungen von den mehreren modenselektiven gefilterten Bewegungssignalen und dem ersten und zweiten Referenzsignal.

35. Verfahren nach Anspruch 34, wobei der genannte Schritt des Erzeugens der mehreren Phasenschätzungen von den mehreren modenselektiven gefilterten Bewegungssignalen und den ersten und zweiten Referenzsignalen die folgenden Schritte beinhaltet:

Multiplizieren eines modenselektiven gefilterten Bewegungssignals mit jeweiligen der ersten und zweiten Referenzsignalen zum Erzeugen von jeweiligen realen und imaginären Komponentensignalen des modenselektiven gefilterten Bewegungssignals; und

Schätzen eines Arcustangens eines Quotienten der realen und imaginären Komponentensignale des modenselektiven gefilterten Bewegungssignals zum Erzeugen einer Phasenschätzung.

36. Verfahren nach Anspruch 29, das ferner einen Schritt des Erzeugens von mehreren Zeitdifferenzschätzungen von den mehreren Phasenschätzungen beinhaltet.

37. Verfahren nach Anspruch 36, das ferner einen Schritt des Erzeugens einer Massenflussschätzung von den mehreren Zeitdifferenzschätzungen beinhaltet.

38. Verfahren nach Anspruch 36, wobei der genannte Schritt des Erzeugens von mehreren Zeitdifferenzschätzungen von den mehreren Phasenschätzungen einen Schritt des Dividierens der mehreren Phasenschätzungen durch eine Modenfrequenz zum Erzeugen von mehreren Zeitdifferenzwerten beinhaltet.

39. Verfahren nach Anspruch 38, wobei der genannte Schritt des Erzeugens von mehreren Zeitdifferenzschätzungen von den mehreren Phasenschätzungen ferner einen Schritt des Anwendens von mehreren Nullfluss-Referenzzeitdifferenzen auf die mehreren Zeitdifferenzwerte zum Erzeugen der mehreren Zeitdifferenzschätzungen beinhaltet.

40. Verfahren nach Anspruch 38, wobei der genannte Schritt des Erzeugens von mehreren Zeitdifferenzschätzungen von den mehreren Phasenschätzungen das Korrigieren der mehreren Phasenschätzungen unter Verwendung von mehreren Nullfluss-Phasenwerten beinhaltet.

41. Verfahren nach Anspruch 38, wobei der genannte Schritt des modenselektiven Filterns den Schritt des Anwendens einer modalen Transformation auf die mehreren Bewegungssignale zum Erzeugen eines modalen Bewegungssignals in einer modalen Koordinatendomäne beinhaltet und wobei das Verfahren ferner einen Schritt des Schätzens der Modenfrequenz von dem modalen Bewegungssignal beinhaltet.

42. Verfahren nach Anspruch 41, das ferner einen Schritt des Schätzens der Dichte von Material in der Leitung von der geschätzten Modenfrequenz beinhaltet.

43. Verfahren nach Anspruch 36, das ferner einen Schritt des Schätzens eines Parameters einer Skalierungsfunktion beinhaltet, die die mehreren Zeitdifferenzschätzungen auf mehrere Referenzzeitschätzungen bezieht, die Bewegung der Konstruktion unter einer bekannten Störung repräsentieren.

44. Verfahren nach Anspruch 43, wobei die Störung Massenfluss ist.

45. Verfahren nach Anspruch 43, wobei der genannte Schritt des Schätzens eines Parameters die folgenden Schritte beinhaltet:

Erzeugen einer erweiterten Matrix, die die mehreren Referenzzeitdifferenzen beinhaltet; und
Multiplizieren der mehreren Differenzzeitschätzungen mit einer Pseudoumkehr der erweiterten Matrix zum Bestimmen des Parameters.

46. Verfahren nach Anspruch 43, wobei der genannte Schritt des Schätzens eines Parameters einen Schritt des iterativen Schätzens der Skalierungsfunktion beinhaltet.

47. Verfahren nach Anspruch 46, wobei der genannte Schritt des iterativen Schätzens einen Schritt des Anwendens eines LMS-(Least Mean Square)-Schätzverfahrens beinhaltet.

48. Verfahren nach Anspruch 43, wobei dem genannten Schritt des Schätzens eines Parameters ein Schritt des Verarbeitens von mehreren Bewegung der Konstruktion unter der bekannten Störung repräsentierenden Bewegungssignalen vorangeht, zum Erzeugen der mehreren Referenzzeitdifferenzen.

49. Verfahren nach Anspruch 44, wobei der Parameter der Skalierungsfunktion ein Steigungsparameter ist, und das ferner einen Schritt des Erzeugens einer Massenflussschätzung von dem Steigungsparameter und dem bekannten Massenfluss beinhaltet.

**50.** Verfahren nach Anspruch 49, wobei der genannte Schritt des Schätzens eines Steigungsparameters einen Schritt des Multiplizierens der mehreren Zeitdifferenzschätzungen mit einer Pseudoumkehr einer Matrix der mehreren Referenzzeitdifferenzen zum Bestimmen des Steigungsparameters beinhaltet.

**51.** Verfahren nach Anspruch 43, wobei der Parameter der Skalierungsfunktion ein Achsenabschnittsparameter ist, und das ferner einen Schritt des Bestimmens eines Systemstatus von dem Achsenabschnittsparameter beinhaltet.

**52.** Verfahren nach Anspruch 51, wobei dem genannten Schritt des modenselektiven Filterns ein Schritt des Empfangens der mehreren Bewegungssignale von mehreren operativ mit der Konstruktion assoziierten Bewegungswandlern vorangeht und wobei der genannte Schritt des Bestimmens eines Systemstatus einen Schritt des Bestimmens eines Status eines Bewegungswandlers von dem Achsenabschnittsparameter beinhaltet.

**53.** Verfahren nach Anspruch 41, das ferner das Schätzen der Dichte eines Materials in der Konstruktion anhand der geschätzten Modenfrequenz beinhaltet.

**54.** Verfahren nach Anspruch 29, wobei das genannte Verfahren die folgenden Schritte beinhaltet:

Schätzen einer Frequenz eines ersten modenselektiven gefilterten Bewegungssignals der mehreren modenselektiven gefilterten Bewegungssignale; und
Erzeugen einer Differenzschätzung von einem zweiten modenselektiven gefilterten Bewegungssignal der mehreren modenselektiven gefilterten Bewegungssignale und der geschätzten Frequenz.

**55.** Verfahren nach Anspruch 54, wobei der genannte Schritt des Erzeugens einer Differenzschätzung die folgenden Schritte beinhaltet:

Erzeugen von ersten und zweiten Quadratur-Referenzsignalen auf der Basis der geschätzten Frequenz; und
Erzeugen einer Differenzschätzung von dem zweiten modenselektiven gefilterten Bewegungssignal und dem ersten und zweiten Referenzsignal.

**56.** Verfahren nach Anspruch 55, wobei der genannte Schritt des Erzeugens einer Differenzschätzung von dem zweiten modenselektiven gefilterten Bewegungssignal und dem ersten und zweiten Referenzsignal die folgenden Schritte beinhaltet:

Erzeugen einer Phasenschätzung von dem zweiten modenselektiven gefilterten Bewegungssignal und dem ersten und zweiten Referenzsignal; und
Erzeugen einer Zeitdifferenzschätzung von der Phasenschätzung.

**57.** Verfahren nach Anspruch 56, wobei der genannte Schritt des Erzeugens einer Phasenschätzung von dem zweiten modenselektiven gefilterten Bewegungssignal und dem ersten und zweiten Referenzsignal die folgenden Schritte beinhaltet:

Multiplizieren des zweiten modenselektiven gefilterten Bewegungssignals mit dem ersten und zweiten Referenzsignal zum Erzeugen von jeweiligen realen und imaginären Komponentensignalen des zweiten modenselektiven gefilterten Bewegungssignals; und
Schätzen eines Arcustangens eines Quotienten der realen und imaginären Komponentensignale des zweiten modenselektiven gefilterten Bewegungssignals zum Erzeugen der Phasenschätzung.

**Revendications**

**1.** Appareil comportant :

un appareil (105 A-D) servant à produire une pluralité de signaux de déplacement (109) représentant le déplacement d'une structure vibrante (100) ;
un appareil (310) qui filtre la pluralité de signaux de déplacement représentant le déplacement de la structure ; et
un appareil qui génère une pluralité de signaux de déplacement filtrés par sélection de mode (315) de telle sorte que les signaux de déplacement filtrés par sélection de mode représentent le déplacement associé à un mode de vibration de la structure ; et

**caractérisé par** ailleurs par un appareil (320) servant à générer une pluralité d'estimations de phase (325) à partir de la pluralité de signaux de déplacement filtrés par sélection de mode, dans lequel une estimation de phase est une différence, en radians ou en degrés, entre deux signaux sinusoïdaux.

2. Appareil selon la revendication 1, comportant par ailleurs un appareil (330) servant à générer une estimation de débit massique (335) à partir de la pluralité d'estimations de phase.

3. Appareil selon la revendication 1, comportant par ailleurs :

un appareil (632) servant à générer une pluralité d'estimations de différence temporelle (633) entre la pluralité de signaux de déplacement filtrés par sélection de mode ; et
un appareil (634) servant à générer une mesure de corrélation à partir de la pluralité d'estimations de différence temporelle ; et
un appareil (450) servant à déterminer un statut d'un système de débitmètre massique à partir de la mesure de corrélation générée.

4. Appareil selon la revendication 1, dans lequel l'appareil servant à générer une pluralité d'estimations de phase comporte un appareil (620) servant à générer la pluralité d'estimations de phase en utilisant une référence de phase dérivée à partir de l'un parmi la pluralité de signaux de déplacement filtrés par sélection de mode.

5. Appareil selon la revendication 1, dans lequel ledit appareil servant à des fins de filtration par sélection de mode comporte :

un appareil (612) servant à appliquer une transformée modale sur la pluralité de signaux de déplacement pour générer une pluralité de signaux de réponse modale dans un domaine de coordonnées modales ; et
un appareil (614) servant à appliquer une transformée par sélection de mode sur la pluralité de signaux de réponse modale pour générer la pluralité de signaux de déplacement filtrés par sélection de mode.

6. Appareil selon la revendication 1, dans lequel ledit appareil servant à générer une pluralité d'estimations de phase comporte :

un appareil (710) servant à estimer une fréquence d'un signal de déplacement filtré par sélection de mode de la pluralité de signaux de déplacement filtrés par sélection de mode ;
un appareil (720) servant à générer des premier et deuxième signaux de référence en quadrature en fonction de la fréquence estimée ; et
un appareil (740) servant à générer la pluralité d'estimations de phase à partir de la pluralité de signaux de déplacement filtrés par sélection de mode et des premier et deuxième signaux de référence.

7. Appareil selon la revendication 6, dans lequel ledit appareil servant à générer la pluralité d'estimations de phase à partir de la pluralité de signaux de déplacement filtrés par sélection de mode et des premier et deuxième signaux de référence comporte :

un appareil (725) servant à multiplier un signal de déplacement filtré par sélection de mode par des signaux respectifs des premier et deuxième signaux de référence pour générer des signaux à composants réel et imaginaire respectifs du signal de déplacement filtré par sélection de mode ; et
un appareil (810) servant à estimer un arc-tangente d'un quotient des signaux à composants réel et imaginaire du signal de déplacement filtré par sélection de mode pour générer une estimation de phase.

8. Appareil selon la revendication 1, comportant par ailleurs un appareil (632) servant à générer une pluralité d'estimations de différence temporelle à partir de la pluralité d'estimations de phase.

9. Appareil selon la revendication 8, comportant par ailleurs un appareil (630) servant à générer une estimation de débit massique à partir de la pluralité d'estimations de différence temporelle.

10. Appareil selon la revendication 8, dans lequel ledit appareil servant à générer une pluralité d'estimations de différence temporelle à partir de la pluralité d'estimations de phase comporte un appareil (530) servant à diviser la pluralité d'estimations de phase par une fréquence de mode pour générer une pluralité de valeurs de différence temporelle.

**11.** Appareil selon la revendication 10, dans lequel ledit appareil servant à générer une pluralité d'estimations de différence temporelle à partir de la pluralité d'estimations de phase comporte par ailleurs un appareil (632) servant à appliquer une pluralité de différences temporelles de référence à débit nul sur la pluralité de valeurs de différence temporelle pour générer la pluralité d'estimations de différence temporelle.

**12.** Appareil selon la revendication 10, dans lequel ledit appareil servant à des fins de filtration par sélection de mode comporte :

un appareil (612) servant à appliquer une transformée modale sur la pluralité de signaux de déplacement pour générer un signal de déplacement modal dans un domaine de coordonnées modales, et
un appareil (640) servant à estimer la fréquence de mode à partir du signal de déplacement modal.

**13.** Appareil selon la revendication 12, comportant par ailleurs un appareil (650) servant à estimer la densité d'un matériau dans la structure à partir de la fréquence de mode estimée.

**14.** Appareil selon la revendication 8, comportant par ailleurs un appareil servant à estimer un paramètre d'une fonction de mise à l'échelle qui établit un rapport entre la pluralité d'estimations de différence temporelle et une pluralité de différences temporelles de référence représentant le déplacement de la structure dans le cadre d'une perturbation connue.

**15.** Appareil selon la revendication 14, dans lequel la perturbation est le débit massique.

**16.** Appareil selon la revendication 14, dans lequel ledit appareil servant à estimer un paramètre comporte :

un appareil servant à générer une matrice augmentée comprenant la pluralité de différences temporelles de référence ; et
un appareil servant à multiplier la pluralité d'estimations de différence temporelle par un pseudo-inverse de la matrice augmentée pour déterminer le paramètre.

**17.** Appareil selon la revendication 14, dans lequel ledit appareil servant à estimer un paramètre comporte l'étape consistant à estimer de manière itérative la fonction de mise à l'échelle.

**18.** Appareil selon la revendication 17, dans lequel ledit appareil servant à estimer de manière itérative un paramètre comporte l'étape consistant à appliquer une procédure d'estimation de type LMS (Least Mean Square - moindres carrés moyens).

**19.** Appareil selon la revendication 14, dans lequel ledit appareil servant à estimer un paramètre est précédé par l'appareil servant à traiter une pluralité de signaux de déplacement représentant le déplacement de la structure dans le cadre de la perturbation connue pour générer la pluralité de différences temporelles de référence.

**20.** Appareil selon la revendication 15, dans lequel le paramètre de la fonction de mise à l'échelle est un paramètre de pente et comportant par ailleurs un appareil (630) servant à générer une estimation de débit massique à partir du paramètre de pente et du débit massique connu.

**21.** Appareil selon la revendication 20, dans lequel ledit appareil (634) servant à estimer un paramètre de pente comporte un appareil servant à multiplier la pluralité d'estimations de différence temporelle par un pseudo-inverse d'une matrice de la pluralité de différences temporelles de référence pour déterminer le paramètre de pente.

**22.** Appareil selon la revendication 14, dans lequel le paramètre de la fonction de mise à l'échelle est un paramètre d'interception et comportant par ailleurs un appareil servant à déterminer un statut du système à partir du paramètre d'interception.

**23.** Appareil selon la revendication 22, dans lequel un appareil servant à des fins de filtration par sélection de mode est précédé par un appareil servant à recevoir la pluralité de signaux de déplacement à partir d'une pluralité de transducteurs de déplacement associés fonctionnellement à la structure, et dans lequel ledit appareil servant à déterminer un statut du système comporte un appareil servant à déterminer un statut d'un transducteur de déplacement à partir du paramètre d'interception.

**24.** Appareil selon la revendication 12, comportant par ailleurs un appareil (650) servant à estimer la densité d'un matériau dans la structure à partir de la fréquence de mode estimée.

**25.** Appareil selon la revendication 1, comportant par ailleurs :

un appareil (640) servant à estimer une fréquence d'un premier signal de déplacement filtré par sélection de mode de la pluralité de signaux de déplacement filtrés par sélection de mode ; et
un appareil servant à générer une estimation de différence à partir d'un deuxième signal de déplacement filtré par sélection de mode de la pluralité de signaux de déplacement filtrés par sélection de mode et de la fréquence estimée.

**26.** Appareil selon la revendication 25, dans lequel l'appareil servant à générer une estimation de différence comporte :

un appareil (720) servant à générer des premier et deuxième signaux de référence en quadrature en fonction de la fréquence estimée ; et
un appareil servant à générer une estimation de différence à partir du deuxième signal de déplacement filtré par sélection de mode et des premier et deuxième signaux de référence.

**27.** Appareil selon la revendication 26, dans lequel l'appareil servant à générer une estimation de différence à partir du deuxième signal de déplacement filtré par sélection de mode et des premier et deuxième signaux de référence comporte :

un appareil servant à générer une estimation de phase à partir du deuxième signal de déplacement filtré par sélection de mode et des premier et deuxième signaux de référence ; et
un appareil servant à générer une estimation de différence temporelle à partir de l'estimation de phase.

**28.** Appareil selon la revendication 27, dans lequel l'appareil servant à générer une estimation de phase à partir du deuxième signal de déplacement filtré par sélection de mode et des premier et deuxième signaux de référence comporte :

un appareil servant à multiplier le deuxième signal de déplacement filtré par sélection de mode par les premier et deuxième signaux de référence pour générer des signaux à composants réel et imaginaire respectifs du deuxième signal de déplacement filtré par sélection de mode ; et
un appareil servant à estimer un arc-tangente d'un quotient des signaux à composants réel et imaginaire du deuxième signal de déplacement filtré par sélection de mode pour générer l'estimation de phase.

**29.** Procédé permettant de faire fonctionner l'appareil selon la revendication 1, le procédé comportant :

une étape consistant à estimer le déplacement d'une structure vibrante ;
une étape consistant à filtrer par sélection de mode une pluralité de signaux de déplacement représentant le déplacement de la structure ;
une étape consistant à générer une pluralité de signaux de déplacement filtrés par sélection de mode représentant le déplacement associé à un mode de vibration de la structure ; et
**caractérisé par** ailleurs par une étape consistant à générer une pluralité d'estimations de phase à partir de la pluralité de signaux de déplacement filtrés par sélection de mode, avec une estimation de phase qui est une différence, en radians ou en degrés, entre deux signaux sinusoïdaux.

**30.** Procédé selon la revendication 29, comportant par ailleurs une étape consistant à générer une estimation de débit massique à partir de la pluralité d'estimations de phase.

**31.** Procédé selon la revendication 29, comportant par ailleurs les étapes consistant à :

générer une pluralité d'estimations de différence temporelle à partir de la pluralité de signaux de déplacement filtrés par sélection de mode ;
générer une mesure de corrélation à partir de la pluralité d'estimations de différence temporelle ; et
déterminer un statut de la structure à partir de la mesure de corrélation générée.

**32.** Procédé selon la revendication 29, dans lequel ladite étape consistant à générer une pluralité d'estimations de phase comporte une étape consistant à générer la pluralité d'estimations de phase en utilisant une référence de phase dérivée à partir de l'un parmi la pluralité de signaux de déplacement filtrés par sélection de mode.

33. Procédé selon la revendication 29, dans lequel ladite étape consistant à appliquer un filtre par sélection de mode comporte les étapes consistant à :

appliquer une transformée modale sur la pluralité de signaux de déplacement pour générer une pluralité de signaux de réponse modale dans un domaine de coordonnées modales ; et
appliquer une transformée par sélection de mode sur la pluralité de signaux de réponse modale pour générer la pluralité de signaux de déplacement filtrés par sélection de mode.

34. Procédé selon la revendication 29, dans lequel ladite étape consistant à générer une pluralité d'estimations de phase comporte les étapes consistant à :

estimer une fréquence d'un signal de déplacement filtré par sélection de mode de la pluralité de signaux de déplacement filtrés par sélection de mode ;
générer des premier et deuxième signaux de référence en quadrature en fonction de la fréquence estimée ; et
générer la pluralité d'estimations de phase à partir de la pluralité de signaux de déplacement filtrés par sélection de mode et des premier et deuxième signaux de référence.

35. Procédé selon la revendication 34, dans lequel ladite étape consistant à générer la pluralité d'estimations de phase à partir de la pluralité de signaux de déplacement filtrés par sélection de mode et des premier et deuxième signaux de référence comporte les étapes consistant à :

multiplier un signal de déplacement filtré par sélection de mode par des signaux respectifs des premier et deuxième signaux de référence pour générer des signaux à composants réel et imaginaire respectifs du signal de déplacement filtré par sélection de mode ; et
estimer un arc-tangente d'un quotient des signaux à composants réel et imaginaire du signal de déplacement filtré par sélection de mode pour générer une estimation de phase.

36. Procédé selon la revendication 29, comportant par ailleurs une étape consistant à générer une pluralité d'estimations de différence temporelle à partir de la pluralité d'estimations de phase.

37. Procédé selon la revendication 36, comportant par ailleurs une étape consistant à générer une estimation de débit massique à partir de la pluralité d'estimations de différence temporelle.

38. Procédé selon la revendication 36, dans lequel ladite étape consistant à générer une pluralité d'estimations de différence temporelle à partir de la pluralité d'estimations de phase comporte une étape consistant à diviser la pluralité d'estimations de phase par une fréquence de mode pour générer une pluralité de valeurs de différence temporelle.

39. Procédé selon la revendication 38, dans lequel ladite étape consistant à générer une pluralité d'estimations de différence temporelle à partir de la pluralité d'estimations de phase comporte par ailleurs une étape consistant à appliquer une pluralité de différences temporelles de référence à débit nul sur la pluralité de valeurs de différence temporelle pour générer la pluralité d'estimations de différence temporelle.

40. Procédé selon la revendication 38, dans lequel ladite étape consistant à générer une pluralité d'estimations de différence temporelle à partir de la pluralité d'estimations de phase comporte l'étape consistant à corriger la pluralité d'estimations de phase en utilisant une pluralité de valeurs de phase à débit nul.

41. Procédé selon la revendication 38, dans lequel ladite étape consistant à filtrer par sélection de mode comporte l'étape consistant à appliquer une transformée modale sur la pluralité de signaux de déplacement pour générer un signal de déplacement modal dans un domaine de coordonnées modales, et dans lequel le procédé comporte par ailleurs une étape consistant à estimer la fréquence de mode à partir du signal de déplacement modal.

42. Procédé selon la revendication 41, comportant par ailleurs une étape consistant à estimer la densité d'un matériau dans le conduit à partir de la fréquence de mode estimée.

**43.** Procédé selon la revendication 36, comportant par ailleurs une étape consistant à estimer un paramètre d'une fonction de mise à l'échelle qui établit un rapport entre la pluralité d'estimations de différence temporelle et une pluralité de différences temporelles de référence représentant le déplacement de la structure dans le cadre d'une perturbation connue.

**44.** Procédé selon la revendication 43, dans lequel la perturbation est le débit massique.

**45.** Procédé selon la revendication 43, dans lequel ladite étape consistant à estimer un paramètre comporte les étapes consistant à :

génerer une matrice augmentée comprenant la pluralité de différences temporelles de référence ; et
multiplier la pluralité d'estimations de différence temporelle par un pseudo-inverse de la matrice augmentée pour déterminer le paramètre.

**46.** Procédé selon la revendication 43, dans lequel ladite étape consistant à estimer un paramètre comporte une étape consistant à estimer de manière itérative la fonction de mise à l'échelle.

**47.** Procédé selon la revendication 46, dans lequel ladite étape consistant à estimer de manière itérative comporte une étape consistant à appliquer une procédure d'estimation de type LMS (Least Mean Square - moindres carrés moyens).

**48.** Procédé selon la revendication 43, dans lequel ladite étape consistant à estimer un paramètre est précédée par une étape consistant à traiter une pluralité de signaux de déplacement représentant le déplacement de la structure dans le cadre de la perturbation connue pour générer la pluralité de différences temporelles de référence.

**49.** Procédé selon la revendication 44, dans lequel le paramètre de la fonction de mise à l'échelle est un paramètre de pente et comportant par ailleurs une étape consistant à générer une estimation de débit massique à partir du paramètre de pente et du débit massique connu.

**50.** Procédé selon la revendication 49, dans lequel ladite étape consistant à estimer un paramètre de pente comporte une étape consistant à multiplier la pluralité d'estimations de différence temporelle par un pseudo-inverse d'une matrice de la pluralité de différences temporelles de référence pour déterminer le paramètre de pente.

**51.** Procédé selon la revendication 43, dans lequel le paramètre de la fonction de mise à l'échelle est un paramètre d'interception et comportant par ailleurs une étape consistant à déterminer un statut du système à partir du paramètre d'interception.

**52.** Procédé selon la revendication 51, dans lequel ladite étape consistant à filtrer par sélection de mode est précédée par une étape consistant à recevoir la pluralité de signaux de déplacement à partir d'une pluralité de transducteurs de déplacement associés fonctionnellement à la structure, et dans lequel ladite étape consistant à déterminer un statut du système comporte une étape consistant à déterminer un statut d'un transducteur de déplacement à partir du paramètre d'interception.

**53.** Procédé selon la revendication 41, comportant par ailleurs l'étape consistant à estimer la densité d'un matériau dans la structure à partir de la fréquence de mode estimée.

**54.** Procédé selon la revendication 29, ledit procédé comportant les étapes consistant à :

estimer une fréquence d'un premier signal de déplacement filtré par sélection de mode de la pluralité de signaux de déplacement filtrés par sélection de mode ; et
génerer une estimation de différence à partir d'un deuxième signal de déplacement filtré par sélection de mode de la pluralité de signaux de déplacement filtrés par sélection de mode et de la fréquence estimée.

**55.** Procédé selon la revendication 54, dans lequel ladite étape consistant à générer une estimation de différence comporte les étapes consistant à :

génerer des premier et deuxième signaux de référence en quadrature en fonction de la fréquence estimée ; et
génerer une estimation de différence à partir du deuxième signal de déplacement filtré par sélection de mode et des premier et deuxième signaux de référence.

56. Procédé selon la revendication 55, dans lequel ladite étape consistant à générer une estimation de différence à partir du deuxième signal de déplacement filtré par sélection de mode et des premier et deuxième signaux de référence comporte les étapes consistant à :

générer une estimation de phase à partir du deuxième signal de déplacement filtré par sélection de mode et des premier et deuxième signaux de référence ; et
générer une estimation de différence temporelle à partir de l'estimation de phase.

57. Procédé selon la revendication 56, dans lequel ladite étape consistant à générer une estimation de phase à partir du deuxième signal de déplacement filtré par sélection de mode et des premier et deuxième signaux de référence comporte les étapes consistant à :

multiplier le deuxième signal de déplacement filtré par sélection de mode par les premier et deuxième signaux de référence pour générer des signaux à composants réel et imaginaire respectifs du deuxième signal de déplacement filtré par sélection de mode ; et
estimer un arc-tangente d'un quotient des signaux à composants réel et imaginaire du deuxième signal de déplacement filtré par sélection de mode pour générer l'estimation de phase.

**FIG. 1**

**FIG. 2**

**FIG. 3**

36

FIG. 4

**FIG. 5**

*FIG. 6*

FIG. 7

*FIG. 8*

**FIG. 9**

EP 1 360 463 B1

## *FIG. 10*

1000

START

DETERMINE PSEUDOINVERSE $W$ OF AUGMENTED MATRIX $Z$ ASSOCIATED WITH KNOW MASS FLOW $F_c$ — 1010

MULTIPLY VECTOR OF TIME DIFFERENCE ESTIMATES $X_e$ BY THE PSEUDOINVERSE MATRIX $W$ TO DETERMINE SCALING VECTOR $c$ — 1020

MULTIPLY SLOPE PARAMETER $a$ BY KNOWN MASS FLOW $F_c$ TO PRODUCE MASS FLOW ESTIMATE — 1030

AVERAGE MASS FLOW ESTIMATE WITH OTHER MASS FLOW ESTIMATES TO PRODUCE FILTERED MASS FLOW MEASUREMENT — 1040

MONITOR INTERCEPT PARAMETER $b$ TO DETECT SYSTEM CHANGES — 1050

END

## FIG. 11

1100

```
      ┌─────────┐
      │  START  │
      └─────────┘
           │
           ▼
┌────────────────────────────────────┐
│  DETERMINE PSEUDOINVERSE $Y_e^{-1}$ │────1110
└────────────────────────────────────┘
           │
           ▼
┌────────────────────────────────────┐
│ MULTIPLY VECTOR OF TIME DIFFERENCE  │
│ ESTIMATES $X_e$                     │
│ BY PSEUDOINVERSE $Y_e^{-1}$ TO      │────1120
│ DETERMINE SLOPE PARAMETER $a$       │
└────────────────────────────────────┘
           │
           ▼
┌────────────────────────────────────┐
│ MULTIPLY SLOPE PARAMETER $a$ BY     │
│ KNOWN MASS FLOW $F_C$ TO PRODUCE    │────1130
│ MASS FLOW ESTIMATE                  │
└────────────────────────────────────┘
           │
           ▼
┌────────────────────────────────────┐
│ AVERAGE MASS FLOW ESTIMATE WITH     │
│ OTHER MASS FLOW ESTIMATES TO        │────1140
│ PRODUCE FILTERED MASS FLOW          │
│ MEASUREMENT                         │
└────────────────────────────────────┘
           │
           ▼
      ┌─────────┐
      │   END   │
      └─────────┘
```

FIG. 12

FIG. 13

## FIG. 14

1400

START

1410 — GENERATE $X_e$

1420 — INITIALIZE SCALING VECTOR $c(k)$

1430 — DETERMINE ERROR $L(k)$

1440 — DETERMINE COST $J(k)$

1450 — IS COST $J(k)$ LESS THAN PREDETERMINED VALUE ?

YES → ESTIMATE MASS FLOW FROM $X_e$ AND $c(k)$ — 1455

NO

1460 — $k = k + 1$

1470 — DETERMINE SCALING VECTOR $c(k)$

## FIG. 15

1500

```
       START
         │
         ▼
┌─────────────────────────────────┐
│ MODE SELECTIVE FILTER PLURALITY  │
│ OF MOTION SIGNALS                │
│ REPRESENTING MOTION OF STRUCTURE │      1510
│ TO GENERATE                      │
│ CORRESPONDING PLURALITY OF       │
│ MODALLY FILTERED MOTION SIGNALS  │
└─────────────────────────────────┘
         │
         ▼
┌─────────────────────────────────┐
│ GENERATE PLURALITY OF PHASE      │
│ ESTIMATES FROM PLURALITY OF      │      1520
│ MODALLY FILTERED MOTION SIGNALS  │
└─────────────────────────────────┘
         │
         ▼
        END
```

## FIG. 16

1600

```
       START
         │
         ▼
┌─────────────────────────────────┐
│ MODE SELECTIVE FILTER PLURALITY  │
│ OF MOTION SIGNALS                │
│ TO GENERATE CORRESPONDING        │      1610
│ PLURALITY OF MODALLY             │
│ FILTERED MOTION SIGNALS          │
└─────────────────────────────────┘
         │
         ▼
┌─────────────────────────────────┐
│ GENERATE PLURALITY OF PHASE      │
│ ESTIMATES FROM PLURALITY OF      │      1620
│ MODALLY FILTERED MOTION SIGNALS  │
└─────────────────────────────────┘
         │
         ▼
┌─────────────────────────────────┐
│ GENERATE MASS FLOW ESTIMATE      │
│ FROM PLURALITY OF PHASE          │      1630
│ ESTIMATES                        │
└─────────────────────────────────┘
         │
         ▼
        END
```

## FIG. 17

1700

START

MODE SELECTIVE FILTER PLURALITY OF MOTION SIGNALS TO GENERATE CORRESPONDING PLURALITY OF MODALLY FILTERED MOTION SIGNALS ~1710

ESTIMATE FREQUENCY OF FIRST MODALLY FILTERED MOTION SIGNAL ~1720

GENERATE DIFFERENCE ESTIMATE FROM SECOND MODALLY FILTERED MOTION SIGNAL USING ESTIMATED FREQUENCY ~1730

END

## FIG. 18

1800

START

PROCESS PLURALITY OF MOTION SIGNALS TO GENERATE PLURALITY OF DIFFERENCE ESTIMATES ~1810

ESTIMATE SLOPE PARAMETER RELATING PLURALITY OF DIFFERENCE ESTIMATES TO PLURALITY OF DIFFERENCE VALUES AT KNOW MASS FLOW ~1820

GENERATE MASS FLOW ESTIMATE FROM ESTIMATED SLOPE PARAMETER AND KNOW MASS FLOW ~1830

END

*FIG. 19*

1900

START

APPLY MODAL TRANSFORMATION TO PLURALITY OF MOTION SIGNALS TO GENERATE PLURALITY OF MODAL MOTION SIGNALS ⎯ 1910

ESTIMATE AT LEAST ONE MODE FREQUENCY FROM PLURALITY OF MODAL MOTION SIGNALS ⎯ 1920

ESTIMATE DENSITY FROM ESTIMATED ???? AT LEAST ONE MODE FREQUENCY ⎯ 1930

END

FIG. 20A

FIG. 20B

**FIG. 21**

**FIG. 22**

**FIG. 23**

**FIG. 24**

**FIG. 25**

**FIG. 26**

Legend:
——— ACTUAL FLOW RATE
--------- PERTURBED FLOW RATE
·············· FLOW RATE CORRECTED FOR FAILED PICKOFF

*FIG. 27*

*FIG. 28*

2800

START

PROCESS PLURAILTY OF MOTION SIGNALS TO
GENERATE PLURALITY OF DIFFERENCE ESTIMATES
— 2810

GENERATE CORRELATION MEASURE (e.g., INTERCEPT
PARAMETER, CORRELATION COEFFICIENT, ERROR OF
ESTIMATE) FROM PLURALITY OF DIFFERENCE ESTIMATES
— 2820

DETERMINE SYSTEM STATUS FROM
GENERATED CORRELATION MEASURE
— 2830

END

# FIG. 29

2900

START

↓

GENERATE VECTOR OF TIME
DISPLACEMENT ESTIMATES — 2910

↓

DETERMINE CORRELATION MEASURE
(e. g., INTERCEPT PARAMETER,
CORRELATION COEFFICIENT, ERROR
OF ESTIMATE) — 2920

↓

CHANGE
MEETS PREDETERMINED
CRITERION
? — 2930

NO →

YES

↓

IDENTIFY FAILED
TRANSDUCERS — 2940

↓

ZERO OUT APPROPRIATE ELEMENT(S)
OF AUGMENTED (Z) MATRIX — 2950

↓

RECOMPUTE
PSUEDOINVERSE (W) MATRIX — 2960

# FIG. 30

3000

START

DETERMINE SCALAR
INTERCEPT VALUE          3010

CHANGE
MEETS PREDETERMINED
CRITERION
?          3020

NO

YES

RECOMPUTE MODE
SELECTIVE FILTER          3030

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4109524 A, Smith
- US 4491025 A, Smith
- US RE31450 E, Smith
- WO 0049371 A
- WO 0004345 A
- WO 0008423 A
- US 09116410 B